# EUROPEAN PATENT SPECIFICATION

(11) **EP 3 444 758 B1**
(45) Date of publication and mention of the grant of the patent: **17.11.2021**
(21) Application number: 16898264.3
(22) Date of filing: 15.04.2016
(51) Int. Cl.: G06N 3/08, G06N 3/063, G06N 3/04, G06N 5/00

(54) **DISCRETE DATA REPRESENTATION-SUPPORTING APPARATUS AND METHOD FOR BACK-TRAINING OF ARTIFICIAL NEURAL NETWORK**
VORRICHTUNG ZUR UNTERSTÜTZUNG DER REPRÄSENTATION DISKRETER DATEN UND VERFAHREN ZUM RÜCKWÄRTIGEN TRAINIEREN EINES KÜNSTLICHEN NEURONALEN NETZWERKS
APPAREIL DE SUPPORT DE REPRÉSENTATION DE DONNÉES DISCRÈTES ET PROCÉDÉ D'APPRENTISSAGE ARRIÈRE D'UN RÉSEAU NEURONAL ARTIFICIEL

(43) Date of publication of application: 20.02.2019
(73) Proprietor: Cambricon Technologies Corporation Limited, Beijing 100190 (CN)
(72) Inventor: GUO, Qi, Beijing 100190 (CN); YU, Yong, Beijing 100190 (CN); CHEN, Tianshi, Beijing 100190 (CN); CHEN, Yunji, Beijing 100190 (CN)
(74) Representative: AWA Sweden AB
(86) International application number: PCT/CN2016/079443
(87) International publication number: WO 2017/177446

(56) References cited:
- WO-A1-2016/037351
- CN-A- 101 625 735
- CN-A- 101 833 691
- CN-A- 103 150 596
- CN-A- 105 144 203
- US-A- 5 631 469
- P.O. DOMINGOS ET AL: "An efficient and scalable architecture for neural networks with backpropagation learning", PROCEEDINGS / 2005 INTERNATIONAL CONFERENCE ON FIELD PROGRAMMABLE LOGIC AND APPLICATIONS (FPL) : TAMPERE HALL, TAMPERE, FINLAND, AUGUST 24 - 26, 2005, 24 August 2005 (2005-08-24), - 26 August 2005 (2005-08-26), pages 89-94, XP055606447, Piscataway, NJ DOI: 10.1109/FPL.2005.1515704 ISBN: 978-0-7803-9362-2
- ZHOUHAN LIN ET AL: "Neural Networks with Few Multiplications", CORR (ARXIV), vol. 1510.03009v3, 26 February 2016 (2016-02-26), pages 1-9, XP055414215,
- Daniel Soudry ET AL: "Expectation Backpropagation: Parameter-Free Training of Multilayer Neural Networks with Continuous or Discrete Weights", NIPS'14 Proceedings of the 27th International Conference on Neural Information Processing Systems, 8 December 2014 (2014-12-08), pages 963-971, XP055641237, Retrieved from the Internet: URL:https://papers.nips.cc/paper/5269-expe ctation-backpropagation-parameter-free-tra ining-of-multilayer-neural-networks-with-c ontinuous-or-discrete-weights.pdf [retrieved on 2019-11-11]
- HAMALAINEN T ET AL: "TUTNC: a general purpose parallel computer for neural network computations", MICROPROCESSORS AND MICROSYSTEMS, IPC BUSINESS PRESS LTD. LONDON, GB, vol. 19, no. 8, 1 October 1995 (1995-10-01), pages 447-465, XP004032581, ISSN: 0141-9331, DOI: 10.1016/0141-9331(96)82010-2

## Description

### TECHNICAL FIELD

The present disclosure generally relates to an artificial neural network, and in particular, to a device and method configured to perform reverse training of the artificial neural network. In the present disclosure, data support discrete data representation, and operations of successive data, for example a multiplication operation, are replaced with bitwise operations of discrete data.

### BACKGROUND

A multilayer artificial neural network is widely applied to various fields, for example mode identification, image processing, function approximation, and calculation optimization. It is recently receiving more and more attention from academic and industrial communities due to high identification accuracy and fine parallelizability. WO 2016/037351 A1, ZhouHan Lin ET AL: "Neural Networks with Few Multiplications", vol. 1510.03009v3, 26 February 2016 (2016-02-26), pages 1-9, Daniel Soudry ET AL: "Expectation Backpropagation: Parameter-Free Training of Multilayer Neural Networks with Continuous or Discrete weights", NIPS'14 Proceedings of the 27th International Conference on Neural Information Processing Systems, 8 December 2014 (2014-12-08), pages 963-971 relate to neural networks trainings. HAMALAINEN T ET AL: "TUTNC: a general purpose parallel computer for neural network computations", (MICROPROCESSORS AND MICROSYSTEMS, IPC BUSINESS PRESS LTD. LONDON, GB, vol. 19, no. 8, 1 October 1995 (1995-10-01), pages 447-465) and KLAPURI H ET AL: "MAPPING ARTIFICIAL NEURAL NETWORKS TO A TREE SHAPE NEUROCOMPUTER", (MICROPROCESSORS AND MICROSYSTEMS, IPC BUSINESS PRESS LTD. LONDON, GB, vol. 20, no. 5, 1 September 1996 (1996-09-01), pages 267-276) relate to a tree shape computer for processing neural networks.

A known method supporting the reverse training of the multilayer artificial neural network is using a general-purpose processor. This method supports the algorithm by means of using a general register file and a general functional component to execute general instructions. Another known method supporting the reverse training of the multilayer artificial neural network is using a graphic processing unit (GPU). This method supports the algorithm by means of using the general register file and a general stream processing unit to execute the general SIMD instructions.

Such two devices use the successive data for data storage and calculation. The storage of the successive data requires more resources, for example, the storage of a 32-bit floating-point datum requires 32 bits. Functional components, for example an adder and a multiplier, required for successive data calculation are relatively complex to achieve.

The discrete data representation refers to a storage manner of replacing non-successive real data with specified numbers. For example, four numbers, 0, 1, 2, and 3, may represent four real numbers, -1, -1/8, 1/8, and 1, respectively. By means of such a representation manner similar to an index, non-successive discrete real data may be replaced with formally successive numbers. A known method adopted by a prior multilayer artificial neural network for data representation is using successive data representation, for example floating-point data representation or fixed-point data representation. Since the multilayer neural network has a large quantity of high accurate weights, the successive data representation causes higher consumption in storage and power. However, by means of the discrete data representation, a multiplication operation of the successive data may be replaced with the bitwise operations of the data, for example an exclusive-OR operation and an arithmetic shift operation, thereby greatly reducing the number of the multiplier components.

### SUMMARY

The invention is defined by the appended claims. According to an aspect of the present disclosure, a device configured to perform reverse training of an artificial neural network supporting discrete data representation is provided, and includes an instruction caching unit, a controller unit, a data access unit, an interconnecting module, a primary operating module, and a plurality of secondary operating modules.

The instruction caching unit is configured to cache an instruction.

The controller unit is configured to read the instruction from the instruction caching unit, and decode the instruction into microinstructions configured to control operations of the interconnecting module, the primary operating module, and the secondary operating modules.

The data access unit is configured to read discretely or successively represented data from a memory and write in corresponding data caching units of the primary operating module and the secondary operating modules, or read the discretely or successively represented data from the data caching units and write in the memory.

When each layer in the artificial neural network starts reverse training, the primary operating module transmits an input neuron gradient vector of the layer to all the secondary operating modules via the interconnecting module, and after the secondary operating modules finish calculations, the interconnecting module adds partial sums of an output neuron gradient vector of the secondary operating modules together in pairs stage by stage to obtain the output neuron gradient vector of the layer.

The primary operating module is configured to, in an calculation process of each layer, perform subsequent calculations using the output neuron gradient vector of the layer, wherein when input data are mixed data including discrete data and successive data, the primary operating module adopts preset corresponding calculations for different discrete data.

Each secondary operating module is configured to use the same input neuron gradient vector and respective discrete or successive weight data to calculate the corresponding partial sum of the output neuron gradient vector in parallel, wherein when the input data are the mixed data including the discrete data and the successive data, the secondary operating modules adopt preset corresponding calculations for the different discrete data.

Optionally, the discrete data representation refers to a representation of replacing real successive data with specified discrete data.

Optionally, the plurality of the secondary operating modules use the same input neuron gradient vector to calculate respective weight gradients in parallel, and use the calculated respective weight gradients to update the respective weigh data.

Optionally, the primary operating module contrapuntally multiplies the output neuron gradient vector of each layer by a derivative value of an activation function of a next layer to obtain an input neuron gradient vector of the next layer.

The interconnecting module forms a data path for the successive or discrete data between the primary operating module and the plurality of the secondary operating modules. In one implementation, the interconnecting module has an H-tree structure. The H-tree structure is a binary tree path formed by a plurality of nodes, and each node transmits upstream data to two downstream nodes, adds the discrete or successive data returned from the two downstream nodes together, and returns to the upstream node.

The primary operating module includes an operating unit, a data dependency relationship determining unit, and a neuron caching unit supporting the discrete data representation.

The neuron caching unit supporting the discrete data representation is configured to cache the discrete or successive input data and output data used by the primary operating module in a calculation process.

The operating unit performs various operating functions of the primary operating module. When the input data are the mixed data including the discrete data and the successive data, preset corresponding calculations are adopted for the different discrete data.

The data dependency relationship determining unit is a port for the operating unit to read from and write in the neuron caching unit, ensures that the successive data or the discrete data in the neuron caching unit do not have reading and writing consistency violation, and reads the input neuron gradient vector from the neuron caching unit, transmits to the secondary operating modules via the interconnecting module.

The output neuron gradient vector from the interconnecting module is transmitted to the operating unit.

Each secondary operating module includes an operating unit, a data dependency relationship determining unit, a neuron caching unit supporting the discrete data representation, a weight caching unit supporting the discrete data representation, and a weight gradient caching unit supporting the discrete data representation.

The operating unit is configured to receive the microinstructions transmitted by the controller unit and perform arithmetic logic operations. When the input data are the mixed data including the discrete data and the successive data, preset corresponding calculations are adopted for the different discrete data.

The data dependency relationship determining unit is configured to perform reading and writing operations on the neuron caching unit supporting the discrete data representation, the weight caching unit supporting the discrete data representation, and the weight gradient caching unit supporting the discrete data representation in a calculation process, and ensure that the neuron caching unit supporting the discrete data representation, the weight caching unit supporting the discrete data representation, and the weight gradient caching unit supporting the discrete data representation do not have reading and writing consistency violation.

The neuron caching unit supporting the discrete data representation is configured to cache a scalar datum in the data of the input neuron gradient vector supporting the discrete data representation which corresponds to the secondary operating module and the partial sum of the output neuron gradient vector calculated by the secondary operating module.

The weight caching unit supporting the discrete data representation is configured to cache discretely or successively represented weight data required by the secondary operating module in a calculation process. Each secondary operating module merely stores a row in a weight matrix corresponding to the scalar datum stored in the secondary operating module.

The weight gradient caching unit supporting the discrete data representation is configured to cache weight gradient data required by the corresponding secondary operating module when the weight is updated. The weight gradient data stored in each secondary operating module corresponds to the discretely or successively represented weight data stored in the secondary operating module.

Optionally, the reading and writing consistency violation is ensured by means of determining whether data of microinstructions not executed have a dependency relationship to data of microinstructions being executed. When the data of the microinstructions not executed do not have the dependency relationship to the data of the microinstructions being executed, the microinstructions are allowed to be transmitted immediately, otherwise the microinstructions not executed are not allowed to be transmitted until all the microinstructions depended on by the microinstructions not executed are executed.

The operating unit includes an operation determining unit and a mixed data operating unit. When the input data are the mixed data, the operation determining unit determines which operation is performed on the mixed data according to the discrete data included in the mixed data, and then, the mixed data operating unit performs corresponding operations according to a result determined by the operation determining unit.

Optionally, the operating unit further includes a data type determining unit and at least one of a discrete data operating unit and a successive data operating unit. When the input data are merely the discrete data, the discrete data operating unit performs corresponding operations by table look-up according to the input discrete data. When the input data are merely the successive data, the successive data operating unit performs corresponding operations.

Optionally, the device further includes a converting module. The converting module includes a pre-processing unit, a distance calculating unit, and a determining unit. It is assumed that M discrete data are used where M=2^{m}, m≥1, and the discrete data correspond to M values in a preset interval [-zone, zone], respectively.

The pre-processing unit performs a clip(-zone, zone) operation on an input successive datum x, and obtains a pre-processed datum y in the interval [-zone, zone]. When x≤-zone, y=-zone; when x≥zone, y=zone; and when -zone<x<zone, y=x.

The distance calculating unit calculates distances between the pre-processed datum y and the M discrete data.

The determining unit calculates discrete data based on the distances and outputs the discrete data.

Optionally, the preset interval [-zone, zone] is [-1, 1] or [-2, 2]; and/or absolute values of the M values are reciprocals of powers of 2; and/or the determining unit outputs a discrete datum corresponding to a value least distant from the pre-processed datum y, and when two values are identically distant from the pre-processed datum, the determining unit outputs a discrete datum corresponding to any one of the two values; and/or the determining unit calculates a normalization probability from the pre-processed datum y to any one of two least distant values, compares the normalization probability corresponding to the any one of two values to a random number ranging from 0 to 1 generated by a random number generating unit, and outputs the discrete datum when the random number is less than the probability, otherwise outputs another discrete datum.

According to another aspect of the present disclosure, a method for performing reverse training of a single-layer artificial neural network by means of using the aforementioned device is provided. According to the provided instruction set, the controller controls reading an input neuron and a derivative value of an activation function in an operation as well as an input gradient, reading weight data and weight gradient data, and reading constants, such as training accuracy and a learning rate of the neural network. These data may be represented by the discrete data or not. Then, the primary operating module, the secondary operating modules, and the interconnecting module perform a weight update operation. Specially, when a multiplication operation is performed on the data represented by the discrete data, the multiplication operation is replaced with bitwise operations performed on related data according to the values of the discrete data. For example, when the weight data are represented by 1-bit discrete data, 0 represents +1 and 1 represents -1. The multiplication operation on the weights is achieved by means of the exclusive-OR operation performed on the sign bit of the data multiplied by the weights.

According to yet another aspect of the present disclosure, a method for using the aforementioned device to support a batch normalization operation of the artificial neural network is provided. According to the provided instruction set, the controller controls the data access unit reading the input data, then controls the primary and secondary operating modules calculating a mean value and a variance of each location according to the size of the batch or uses a preset mean value and a preset variance. Then, the controller subtracts the mean value from an input data of the corresponding location and divides by the variance. Finally, the controller multiplies the processed data by a learning parameter and adds another learning parameter.

According to still another aspect of the present disclosure, a method for performing reverse training of a multilayer artificial neural network by means of using the aforementioned device is provided. The achieving process thereof is similar to that of the single-layer neural network. After a first layer in the artificial neural network finishes the operation, the operation instruction of a second layer uses the output neuron gradient vector calculated by the primary operating module as an input neuron gradient vector for training of the second layer, and performs the aforementioned operation. The weight address and the weight gradient address in the instruction are changed to the addresses corresponding to the second layer.

### BRIEF DESCRIPTION OF THE DRAWINGS

In order to fully understand the present disclosure and advantages thereof, a following description in conjunction with accompanying drawings is made a reference to.
Fig. 1 illustrates an exemplary block diagram of an overall structure of a device configured to perform reverse training of an artificial neural network supporting discrete data representation according to an implementation of the present disclosure.
Fig. 2 schematically illustrates a structure of an H-tree module (an implementation of an interconnecting module) in the device configured to perform the reverse training of the artificial neural network supporting the discrete data representation according to an implementation of the present disclosure.
Fig. 3 illustrates an exemplary block diagram of a structure of a primary operating module in the device configured to perform the reverse training of the artificial neural network supporting the discrete data representation according to an implementation of the present disclosure.
Fig. 4 illustrates an exemplary block diagram of a structure of a secondary operating module in the device configured to perform the reverse training of the artificial neural network supporting the discrete data representation according to an implementation of the present disclosure.
Fig. 5 illustrates an exemplary block diagram of a process of the reverse training of the neural network according to an implementation of the present disclosure.
Fig. 6 illustrates an exemplary block diagram of a process of the reverse training of the neural network supporting the discrete data representation according to an implementation of the present disclosure.
Fig. 7 illustrates a flowchart of an operation of a single-layer artificial neural network according to an implementation of the present disclosure.
Fig. 8 illustrates an exemplary structure of an operating unit for the discrete data according to an implementation of the present disclosure.
Fig. 9 illustrates an exemplary structure of a converting module configured to perform conversion of successive data into discrete data according to an implementation of the present disclosure.

Identical devices, components, and units are denoted by identical reference numerals throughout the accompanying drawings.

### DETAILED DESCRIPTION

Other aspects, advantages, and prominent features of the present disclosure will become apparent to persons skilled in the art from the following detailed description of exemplary implementations of the present disclosure in conjunction with the accompanying drawings.

In the present disclosure, the terms "include" , "comprise" , and derivatives thereof are inclusive, not limitative. The term "or" is inclusive, and means "and/or".

In the description, various implementations used to describe principles of the present disclosure are merely illustrative, and should not be construed as a limit to the scope of the present disclosure in any ways. The following description with reference to the accompanying drawings is used to assist in fully understanding the exemplary implementations of the present disclosure limited by claims thereof. The description includes various specific details to assist in understanding, but these details should be regarded as merely exemplary. Thus, it should be appreciated by persons skilled in the art that various changes and modifications may be made to the implementations described herein without departing from the scope of the present disclosure. Furthermore, descriptions for well-known functions and structures are omitted for clarity and conciseness. In addition, similar reference numerals are used to denote similar functions and operations throughout the accompanying drawings.

Reverse training of a multilayer artificial neural network supporting discrete data representation according to an implementation of the present disclosure includes two or more layers of neurons. For each layer, a weighted addition operation is first performed on an input neuron gradient vector to calculate an output neuron gradient vector of this layer. The output neuron gradient vector is multiplied by a derivative value of an activation function in a forward operation of a next layer to obtain the input neuron gradient vector of the next layer. The input neuron gradient vector is contrapuntally multiplied by input neurons in the forward operation to obtain a weight gradient of this layer. Then, the weight of this layer may be updated according to the obtained weight gradient of this layer. Data in this process may be discrete data or may be successive data.

For a dot product operation of the input neuron vector represented by the discrete data or the weight vector represented by the discrete data, the present device supports conversion of the dot product operation into a bitwise operation of the data, for example an arithmetic shift operation, a NOT operation, an exclusive-OR operation. For the representation of the data, the present device supports the discrete representation or the successive representation of the data. A user may customize which data of which layer adopt the discrete representation or successive representation, and may customize the number of bits of the discrete data according to specific requirements, thereby replacing the number of the represented successive data. For example, 1-bit, 2-bit, or 3-bit discrete datum may represent 2, 4, or 8 successive data, respectively.

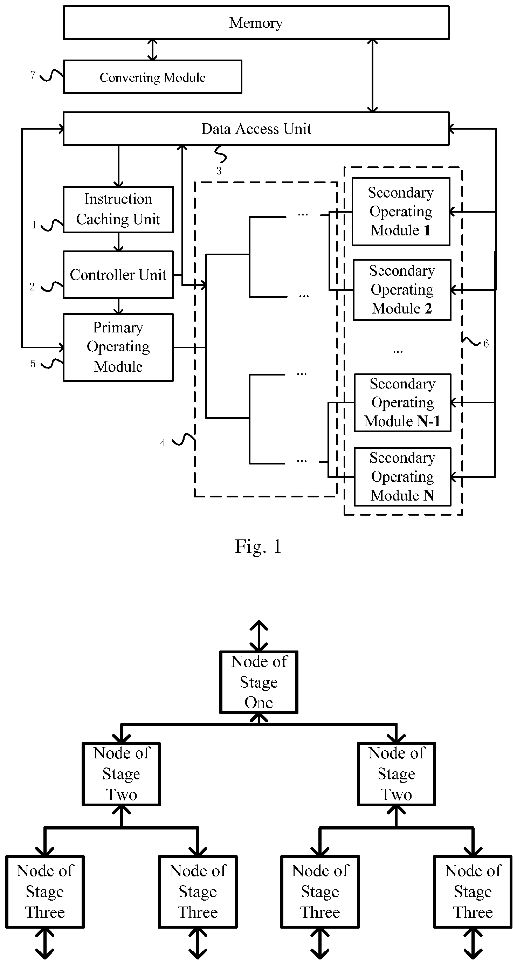

Fig. 1 illustrates an exemplary block diagram of an overall structure of a device configured to perform the reverse training of the artificial neural network supporting the discrete data representation according to an implementation of the present disclosure. As illustrated in Fig. 1, the device includes an instruction caching unit 1, a controller unit 2, a data access unit 3, an interconnecting module 4, a primary operating module 5, and a plurality of secondary operating modules 6. According to an implementation of the present disclosure, the device may further include a converting module 7. The instruction caching unit 1, the controller unit 2, the data access unit 3, the interconnecting module 4, the primary operating module 5, the secondary operating modules 6, and the converting module 7 may be achieved by hardware circuits (including but not limited to FPGAs, CGRAs, ASICs, analog circuits, and memristors). The present device supports the conversion of the successive data into the discrete data and the storage and operations of the discrete data.

The instruction caching unit 1 is configured to read an instruction via the data access unit 3 and cache the read instruction.

The controller unit 2 is configured to read the instruction from the instruction caching unit 1, and decode the instruction into microinstructions configured to control operations of other modules and transmit to the other modules, for example the data access unit 3, the primary operating module 5, and the secondary operating modules 6.

The data access unit 3 can access an external address space (for example, a memory or other storage devices) and directly read the data from and write the data in each caching unit in the device to load and store the data. The data is discretely or non-discretely represented. The unit is designed to be capable of reading the data discretely represented.

The interconnecting module 4 is configured to interconnect the primary operating module and the secondary operating modules.

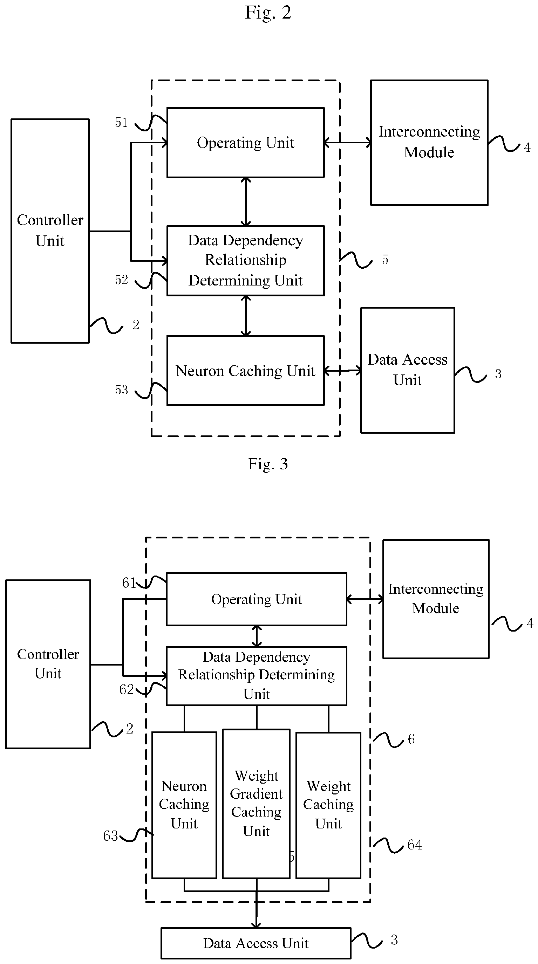

Fig. 2 schematically illustrates an implementation of the interconnecting module 4: an H-tree module. The H-tree module 4 forms a data path between the primary operating module 5 and the plurality of secondary operating modules 6, and has an H-tree structure. The H-tree structure is a binary tree path formed by a plurality of nodes, and each node transmits upstream data to two downstream nodes, or combines data returned from the two downstream nodes, and returns to the upstream node. For example, in the process of the reverse training of the neural network, vectors returned by the two downstream nodes are added together into one vector in the current node, and the one vector is returned to the upstream node. When each layer in the artificial neural network starts operation, an input gradient in the primary operating module 5 is transmitted to each secondary operating module 6 via the H-tree module 4. After the secondary operating modules 6 finish calculations, partial sums of the output neuron gradient vector output by the secondary operating modules are combined in pairs stage by stage in the H-tree module 4, i.e., all the partial sums of the output neuron gradient vector are added together to obtain the final output neuron gradient vector.

Fig. 3 illustrates an exemplary block diagram of a structure of the primary operating module 5 in the device configured to perform the reverse training of the artificial neural network according to an implementation of the present disclosure. As illustrated in Fig. 3, the primary operating module 5 includes an operating unit 51, a data dependency relationship determining unit 52, and a neuron caching unit 53 supporting the discrete data representation.

The neuron caching unit 53 supporting the discrete data representation is configured to cache the input data and the output data used by the primary operating module 5 in a calculation process.

The operating unit 51 performs various operating functions of the primary operating module 5. When operation factors are merely the discrete data, an addition operation, a subtraction operation, a multiplication operation, and a division operation of the discrete data may be achieved by table look-up. For example, a 2-bit discrete datum may represent 4 successive data which may produce 4^{∗}4=16 combinations. For each of the addition operation, the subtraction operation, the multiplication operation, and the division operation, a 4^{∗}4 index table may be prepared and maintained, and a corresponding calculated value may be found from the index table. 4 kinds of operations require four 4^{∗}4 index tables in total.

When the operation factors includes the discrete data and the successive data, corresponding bitwise operations are preset for the addition operations, the subtraction operations, the multiplication operations, and the division operations of different discrete data. For example, the dot product operation of the discrete data and the successive data may be replaced by means of performing a bitwise exclusive-OR operation, multiplying by a corresponding power of 2, and performing an accumulation and summation. For example, in the case of the multiplication operations, if some of multiplication factor data are discretely represented, then corresponding operations (for example, bitwise exclusive-OR operations, NOT operations, arithmetic shift operations operated on the corresponding data) are indexed by the discrete data to replace the multiplication operations on the successive data represented by the discrete data, thereby reducing the number of the multiplier components. For example, in the case of a multiplication operation of a successive datum and a discrete datum, multiplying -1/2 by 16, a traditional multiplier component may multiply -1/2 directly by 16. In the operating unit 51, the likelihood of the discrete data is low, and thus the function of the operating unit may be replaced with an on/off determining method, such as searching an index. For example, the discrete data representation for -1/2 may be defined as 01. If an operation factor is -1/2, then a discrete datum received by the operating unit 51 is 01. The operating unit 51 performs an operation corresponding to the discrete datum 01. The sign bit of a 8-bit fixed-point datum 00010000 representing 16 is inverted, and then the 8-bit fixed-point datum is arithmetically shifted to the right by 1 bit to obtain 10001000 which represents -8 in the decimal system. In the case of a division operation, dividing 16 by -2, where 16 is a successive datum and -2 is a discrete datum, if the binary representation for the discrete datum -2 is defined as 10, then the operating unit performs a division operation corresponding to the discrete datum 10. The 8-bit fixed-point datum 00010000 representing 16 is arithmetically shifted to the right by 1 bit, and then the sign bit thereof is inverted to obtain 10001000 which represents -8 in the decimal system as a result. The addition operation and the subtraction operation are similar to the aforementioned processes. According to the binary representation for the discrete data as an index, the bitwise arithmetic left shift operations, arithmetic right shift operations, exclusive-OR operations, and the like are indexed. By means of the operations, the addition operations and the subtraction operations on the real data represented by the discrete data are achieved.

The data dependency relationship determining unit 52 is a port for the operating unit 51 to read from and write in the neuron caching unit 53, and can ensure the data in the neuron caching unit 53 do not have reading and writing consistency violation. Specifically, the data dependency relationship determining unit 52 determines whether data of microinstructions not executed have a dependency relationship to data of microinstructions being executed. When the data of the microinstructions not executed do not have the dependency relationship to the data of the microinstructions being executed, the microinstructions are allowed to be transmitted immediately, otherwise the microinstructions not executed are not allowed to be transmitted until all the microinstructions depended on by the microinstructions not executed are executed. For example, all the microinstructions transmitted to the data dependency relationship determining unit 52 may be stored in an instruction queue in the data dependency relationship determining unit 52. In this queue, if a scope of data read by a reading instruction conflicts with a scope of data written by a writing instruction which is previous in the queue, then the reading instruction may not be executed until the writing instruction depended on is executed. In the meantime, the data dependency relationship determining unit 52 is also configured to read the input neuron gradient vector from the neuron caching unit 53 and transmit to the secondary operating modules via the interconnecting module 4, and the data output by the secondary operating modules 6 are directly transmitted to the operating unit 51 via the interconnecting module 4. The instruction output by the controller unit 2 is transmitted to the operating unit 51 and the data dependency relationship determining unit 52, to control their actions.

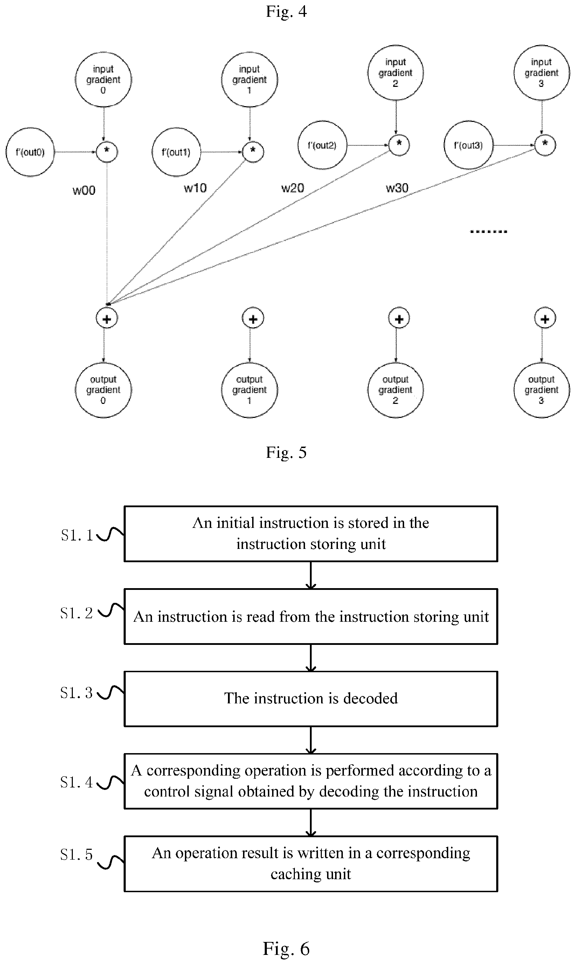

Fig. 4 illustrates an exemplary block diagram of a structure of one secondary operating module 6 in the device configured to perform the reverse training of the artificial neural network supporting the discrete data representation according to an implementation of the present disclosure. As illustrated in Fig. 4, each secondary operating module 6 includes an operating unit 61, a data dependency relationship determining unit 62, a neuron caching unit 63 supporting the discrete data representation, a weight caching unit 64 supporting the discrete data representation, and a weight gradient caching unit 65 supporting the discrete data representation.

The operating unit 61 is configured to receive the microinstructions transmitted by the controller unit 2 and perform arithmetic logic operations. When the operation factors are merely the discrete data, the addition operation, the subtraction operation, the multiplication operation, and the division operation of the discrete data may be achieved by table look-up. For example, a 2-bit discrete datum may represent 4 successive data which may produce 4^{∗}4=16 combinations. For each of the addition operation, the subtraction operation, the multiplication operation, and the division operation, a 4^{∗}4 index table may be prepared and maintained, and a corresponding calculated value may be found from the index table. 4 kinds of operations require four 4^{∗}4 index tables in total.

When the operation factors includes the discrete data and the successive data, corresponding bitwise operations are preset for the addition operations, the subtraction operations, the multiplication operations, and the division operations of different discrete data. For example, the dot product operation of the discrete data and the successive data may be replaced by means of performing a bitwise exclusive-OR operation, multiplying by a corresponding power of 2, and performing an accumulation and summation. For example, in the case of the multiplication operations, if some of multiplication factor data are discretely represented, then corresponding operations (for example, bitwise exclusive-OR operations, NOT operations, arithmetic shift operations operated on the corresponding data) are indexed by the discrete data to replace the multiplication operations on the successive data represented by the discrete data, thereby reducing the number of the multiplier components. For example, in the case of a multiplication operation of a successive datum and a discrete datum, multiplying -1/2 by 16, a traditional multiplier component may multiply -1/2 directly by 16. In the operating unit 51, the likelihood of the discrete data is low, and thus the function of the operating unit may be replaced with an on/off determining method, such as searching an index. For example, the discrete data representation for -1/2 may be defined as 01, and if an operation factor is -1/2, then a discrete datum received by the operating unit 51 is 01. The operating unit 51 performs an operation corresponding to the discrete datum 01. The sign bit of a 8-bit fixed-point datum 00010000 representing 16 is inverted, and then the 8-bit fixed-point datum is arithmetically shifted to the right by 1 bit to obtain 10001000 which represents -8 in the decimal system. In the case of a division operation, dividing 16 by -2, where 16 is a successive datum and -2 is a discrete datum, if the binary representation for the discrete datum -2 is defined as 10, then the operating unit performs a division operation corresponding to the discrete datum 10. The 8-bit fixed-point datum 00010000 representing 16 is arithmetically shifted to the right by 1 bit, and then the sign bit thereof is inverted to obtain 10001000 which represents -8 in the decimal system as a result. The addition operation and the subtraction operation are similar to the aforementioned processes. According to the binary representation for the discrete data as an index, the bitwise arithmetic left shift operations, arithmetic right shift operations, exclusive-OR operations, and the like are indexed. By means of the operations, the addition operations and the subtraction operations on the real data represented by the discrete data are achieved.

The data dependency relationship determining unit 62 is configured to perform reading and writing operations on the neuron caching unit in a calculation process. The data dependency relationship determining unit 62 ensures the reading and writing operations performed on the neuron caching unit do not have reading and writing consistency violation. Specifically, the data dependency relationship determining unit 62 determines whether data of microinstructions not executed have a dependency relationship to data of microinstructions being executed. When the data of the microinstructions not executed do not have the dependency relationship to the data of the microinstructions being executed, the microinstructions are allowed to be transmitted immediately, otherwise the microinstructions not executed are not allowed to be transmitted until all the microinstructions depended on by the microinstructions not executed are executed. For example, all the microinstructions transmitted to the data dependency relationship determining unit 62 may be stored in an instruction queue in the data dependency relationship determining unit 62. In this queue, if a scope of data read by a reading instruction conflicts with a scope of data written by a writing instruction which is previous in the queue, then the reading instruction may not be executed until the writing instruction depended on is executed.

The neuron caching unit 63 supporting the discrete data representation is configured to cache a scalar datum in the data of the input neuron gradient vector corresponding to the secondary operating module 6 and the partial sum of the output neuron gradient vector calculated by the secondary operating module 6.

The weight caching unit 64 supporting the discrete data representation is configured to cache weight data required by the secondary operating module 6 in a calculation process. The weight data may be the discrete data or the successive data, depending on user definition. Each secondary operating module 6 may merely store a row in a weight matrix corresponding to the scalar datum stored in the secondary operating module 6.

The weight gradient caching unit 65 is configured to cache weight gradient data required by the corresponding secondary operating module when the weight is updated. The weight gradient data stored in each secondary operating module 6 corresponds to the weight data stored in the secondary operating module 6.

The secondary operating modules 6 achieve the weight update and the former half of a process of calculating the input neuron gradient vector in the reverse training of each layer in the artificial neural network which may be performed in parallel. Taking a fully connected layer (multi-layer perceptron, MLP) of the artificial neural network for example, the calculation process is out_gradient = w^{∗}in_gradient, where a multiplication of a weight matrix w represented by the discrete data and an input neuron gradient vector in_gradient may be divided into parallel calculation sub-tasks unrelated to each other, and out gradient and in_gradient are row vectors. Each secondary operating module 6 merely calculates a product of a corresponding part of scalar elements in in_gradient and a row corresponding to the weight matrix w, and each obtained output vector is a partial sum to be accumulated into a final result. These partial sums are added together in pairs stage by stage in the interconnecting module 4 to obtain the final result. Therefore, the calculation process is changed into parallel processes of calculating the partial sums and a subsequent accumulating process. Each secondary operating module 6 calculates the partial sum of the output neuron gradient vector, and all the partial sums are added together in the interconnecting module 4 to obtain the final output neuron gradient vector. Each secondary operating module 6 multiplies the input neuron gradient vector by the output value of each layer in the forward operation, calculates the weight gradient, to update the weight stored in the secondary operating module 6. The forward operation and the reverse training are two main processes of the neural network algorithm. When the neural network trains (updates) the weights in the network, a forward output of the input vector in the network constituted by the current weights should first be calculated, which is a forward process, and then, the weights of each layer are reversely trained (updated) layer by layer according to a difference between the output value and a label value of the input vector itself. In the process of the forward operation, the output vector and the derivative value of the activation function of each layer may be saved. These data are required by the process of the reverse training. Therefore, when the reverse training starts, the existence of these data is ensured. The output value of each layer in the forward operation is a datum already existing when the reverse training starts, and may be cached in the primary operating module via the data access unit and transmitted to the secondary operating modules via the interconnecting module. The primary operating module 5 performs the subsequent operations based on the output neuron gradient vector, for example, the output neuron gradient vector is multiplied by the derivative of the activation function in the forward operation to obtain the input gradient value of the next layer. The derivative of the activation function in the forward operation is a datum already existing when the reverse training starts, and may be cached in the primary operating module via the data access unit.

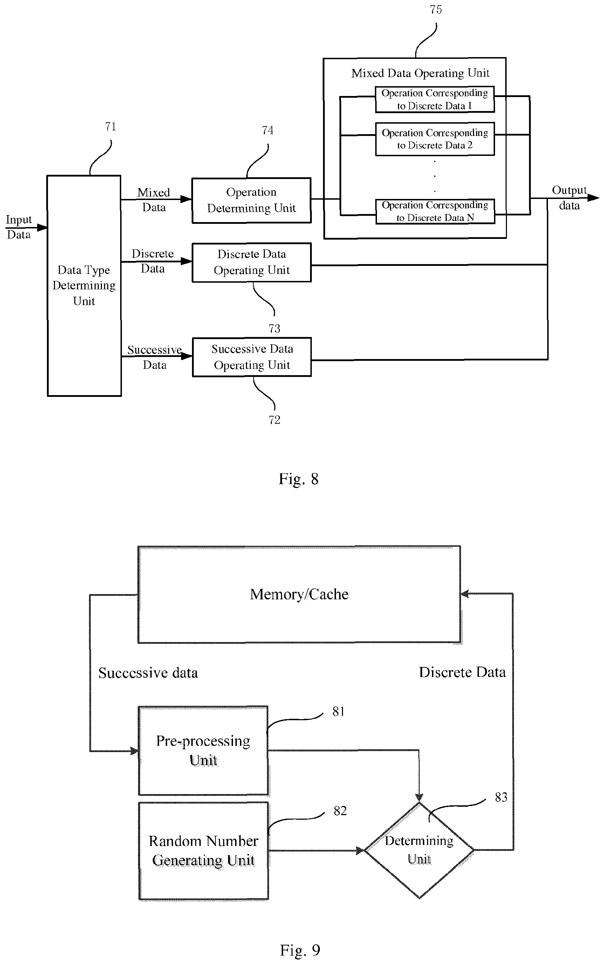

Fig. 8 illustrates a structural block diagram of an operating unit which may be used as the operating unit 51 in the primary operating module or the operating unit 61 in the secondary operating module. The data input in the operation process may be the discrete data or the successive data. A data type determining unit 71 is configured to determine whether the input data are merely the successive data, or merely the discrete data, or mixed data including the successive data and the discrete data. When the input data are merely the successive data, a successive data operating unit 72 performs corresponding operations.

When the input data are merely the discrete data, a discrete data operating unit 73 performs corresponding operations. When the operation factors are merely the discrete data, the addition operation, the subtraction operation, the multiplication operation, and the division operation of the discrete data may be achieved by table look-up. For example, a 2-bit discrete datum may represent 4 successive data which may produce 4^{∗}4=16 combinations. For each of the addition operation, the subtraction operation, the multiplication operation, and the division operation, a 4^{∗}4 index table may be prepared and maintained, and a corresponding calculated value may be found from the index table. 4 kinds of operations require four 4^{∗}4 index tables in total.

When the input data are the mixed data, an operation determining unit 74 determines which operation is performed according to the discrete data included in the mixed data. Corresponding operations are preset for different discrete data, respectively. Then, a mixed data operating unit 75 performs corresponding operations according to a result determined by the operation determining unit 74. When the operation factors includes the discrete data and the successive data, corresponding bitwise operations may be preset for the addition operations, the subtraction operations, the multiplication operations, and the division operations of different discrete data. For example, the dot product operation of the discrete data and the successive data may be replaced by means of performing a bitwise exclusive-OR operation, multiplying by a corresponding power of 2, and performing an accumulation and summation. For example, in the case of the multiplication operations, if some of multiplication factor data are discretely represented, then corresponding operations (for example, bitwise exclusive-OR operations, NOT operations, arithmetic shift operations operated on the corresponding data) are indexed by the discrete data to replace the multiplication operations on the successive data represented by the discrete data, thereby reducing the number of the multiplier components. For example, in the case of a multiplication operation of a successive datum and a discrete datum, multiplying -1/2 by 16, a traditional multiplier component may multiply -1/2 directly by 16. In the operating unit 51, the likelihood of the discrete data is low, and thus the function of the operating unit may be replaced with an on/off determining method, such as searching an index. For example, the discrete data representation for -1/2 may be defined as 01, and if an operation factor is -1/2, then a discrete datum received by the operating unit 51 is 01. The operating unit 51 performs an operation corresponding to the discrete datum 01. The sign bit of a 8-bit fixed-point datum 00010000 representing 16 is inverted, and then the 8-bit fixed-point datum is arithmetically shifted to the right by 1 bit to obtain 10001000 which represents -8 in the decimal system. In the case of a division operation, dividing 16 by -2, where 16 is a successive datum and -2 is a discrete datum, if the binary representation for the discrete datum -2 is defined as 10, then the operating unit performs a division operation corresponding to the discrete datum 10. The 8-bit fixed-point datum 00010000 representing 16 is arithmetically shifted to the right by 1 bit, and then the sign bit thereof is inverted to obtain 10001000 which represents -8 in the decimal system as a result. The addition operation and the subtraction operation are similar to the aforementioned processes. According to the binary representation for the discrete data as an index, the bitwise arithmetic left shift operations, arithmetic right shift operations, exclusive-OR operations, and the like are indexed. By means of the operations, the addition operations and the subtraction operations on the real data represented by the discrete data are achieved.

Fig. 9 illustrates a schematic structural diagram of the converting module 7. The user may determine whether to adopt this module to convert the successive data into the discrete data or not. The successive data are input into the converting module 7, and the discrete data are output. The converting module 7 includes a pre-processing unit 81, a distance calculating unit 82, and a determining unit 83. Here, it is assumed that M (M=2^{m}, m≥1) discrete data are used, and these discrete data correspond to M values in a preset interval, respectively. According to an implementation of the present disclosure, the interval may be an interval [-zone, zone] symmetrical about zero, for example [-1, 1] or [-2, 2]. According to an implementation of the disclosure, the absolute values of the M values are reciprocals of powers of 2. The pre-processing unit performs a clip(-zone, zone) operation on an input successive datum x, and obtains a pre-processed datum y in the interval [-zone, zone]. When x≤-zone, y=-zone; when x≥zone, y=zone; and when - zone<x<zone, y=x. The distance calculating unit 82 calculates distances between the pre-processed datum y and the aforementioned values. The determining unit 83 calculates discrete data based on the distances and outputs the discrete data. For example, the determining unit 83 may output a discrete datum corresponding to a value least distant from the pre-processed datum y. When two values are identically distant from the pre-processed datum y, a discrete datum corresponding to any one of the two values is output. Or, the determining unit 83 may calculate a normalization probability from the pre-processed datum y to any one of two least distant values, compares the normalization probability corresponding to the any one of two values to a random number z ranging from 0 to 1 generated by a random number generating unit 82, and outputs the discrete datum when the random number z is less than the probability, otherwise outputs another discrete datum. For example, the user defines binary discrete data, then M=2. The pre-processing unit 81 performs a clip(-1, 1) operation on an input successive datum x to obtain a pre-processed datum y. Then, the distance calculating unit 82 calculates distances D1, D2 between the pre-processed datum y and the values -1, 1, and here D1>D2 is assumed. The determining unit 83 may output a discrete datum -1 corresponding to D1. Or, the determining unit 83 may calculate a normalization probability from the pre-processed datum y to any one of the two least distant values (since only two values are in the example, the two least distant values are -1 and 1). The probability from y to -1 is P1=D2/(D1+D2), and the probability from y to -2 is P2= D1/(D1+D2). The determining unit 83 compares the normalization probability PI to a random number z ranging from 0 to 1 generated by the random number generating unit 82, and outputs the discrete datum -1 when the random number z is less than the probability PI, otherwise outputs another discrete datum 1. Or, the determining unit 83 compares the normalization probability P2 to the random number z, and outputs the discrete datum 1 when the random number z is less than the probability P2, otherwise outputs another discrete datum -1. According to an implementation of the present disclosure, the determining unit outputs the discrete data in the form of binary data. The relationship between the discrete data and the binary data may be preset, for example, by means of table look-up. For example, 0 may represent 1, and 1 may represent -1. The obtained discrete data is stored in the memory to be used by the operating units in the primary and secondary operating modules, so as to cause corresponding operations.

The weight data in the process of the reverse training may be represented by the discrete data. The multiplication operation on the weight data in the aforementioned process may be replaced with the exclusive-OR operation, the NOT operation, the arithmetic shift operation, etc., based on the storage manner of the discrete data. For example, in the case of 1-bit discrete data representation, 0 represents +1 and 1 represents -1. The multiplication operation on the weights is achieved by means of the exclusive-OR operation performed on the sign bit of the data multiplied by the weights.

An instruction set configured to perform the reverse training of the artificial neural network in the aforementioned device is provided according to an implementation of the present disclosure. The instruction set includes a CONFIG instruction, a COMPUTE instruction, an 10 instruction, a NOP instruction, a JUMP instruction, a MOVE instruction, and the like.

The CONFIG instruction is configured to, before each layer in the artificial neural network starts the operation, set various constants required by the operation of the layer.

The COMPUTE instruction is configured to perform the arithmetic logic operations of each layer in the artificial neural network.

The IO instruction is configured to read the input data required by the operation from the external address space and write the data into the external address space after the operation. The data supports the discrete representation.

The NOP instruction is configured to clear the microinstructions in all the microinstruction caching queues in the device, to ensure that all the instructions before the NOP instruction are completely executed. The NOP instruction does not include any operations.

The JUMP instruction is configured to perform a jump to the address of the next instruction to be read from the instruction caching unit by the controller, to achieve a jump of a controlling flow.

The MOVE instruction is configured to move the data at a certain address in an internal address space of the device to another address in the internal address space of the device. The instruction is independent of the operating unit, and does not occupy resources of the operating unit when it is executed.

Fig. 5 illustrates an exemplary block diagram of a process of the reverse training of the neural network according to an implementation of the present disclosure. A process of calculating an output neuron gradient vector is out_gradient=w^{∗}in_gradient, and a multiplication of a weight matrix w and an input neuron gradient vector in_gradient may be divided into parallel calculation sub-tasks unrelated to each other. Each secondary operating module 6 calculates a partial sum of the output neuron gradient vector, and all the partial sums are added together in the interconnecting module 4 to obtain the final output neuron gradient vector. The output neuron gradient vector in a preceding layer in Fig. 5 is multiplied by a derivative of a corresponding activation function to obtain input data of a present layer which is subsequently multiplied by a weight matrix to obtain the output neuron gradient vector. A process of calculating a weight update gradient is dw=x^{∗}in_gradient, and each secondary operating module 6 calculates a portion of the weight update gradient corresponding to it. The secondary operating module 6 multiplies the input gradient by the input neuron in the forward operation to calculate the weight update gradient dw, and then uses w, dw, and the weight update gradient dw' used when the weight is updated last time to update the weight w according to a learning rate set by the instruction.

Referring to Fig. 5, the input gradient ([input gradient0, •••, input gradient3] as illustrated in Fig. 5) is an output neuron gradient vector of the (n+1)-th layer. This vector is first multiplied by a derivative value ([f'(out0), •••, f (out3)] as illustrated in Fig. 5) of the n-th layer in the forward operation to obtain an input neuron gradient vector of n-th layer, which are performed in the primary operating module 5. The input neuron gradient vector is transmitted to the secondary operating module 6 via the interconnecting module 4, and temporarily cached in the neuron caching unit 63 of the secondary operating module 6. Then, the input neuron gradient vector is multiplied by the weight matrix to obtain the output neuron gradient vector of the n-th layer. In this process, the i-th secondary operating module calculates a product of the i-th scalar in the input neuron gradient vector and a row vector [w_i0, •••, w_iN] in the weight matrix. The obtained the output vectors are added together in pairs stage by stage in the interconnecting module 4 to obtain the final output neuron gradient vector ([output gradient0, •••, output gradient3] as illustrated in Fig. 5).

In the meantime, the secondary operating module 6 should update the weight stored therein. A process of calculating the weight update gradient is dw_ij=x_j^{∗}in_gradient_i, where x_j is the j-th element in the input vector of the n-th layer (i.e., the output vector of the (n-1)-th layer) in the forward operation, and in_gradient_i is the i-th element in the input neuron gradient vector (i.e., a product of the input gradient and the derivative f as illustrated in Fig. 5) of the n-th layer in the reverse training. The input vector of the n-th layer in the forward operation is a datum already existing when the reverse training starts, and is transmitted to the secondary operating modules 6 via the interconnecting module 4 and temporarily cached in the data access units 63. Then, in the secondary operating module 6, after the partial sums of the output neuron gradient vector are added together, the i-th scalar in the input neuron gradient vector is multiplied by the input vector of the n-th layer in the forward operation to obtain the gradient vector dw for updating the weight and update the weight according to it.

Fig. 6 illustrates a method for implementing the reverse training of the artificial neural network supporting the discrete data representation according to an implementation. This flowchart describes a process of achieving the reverse training of a single-layer artificial neural network supporting the discrete data representation as illustrated in Fig. 5 by means of using the device and the instruction set according to the present disclosure.

At step S1.1, an initial instruction is stored in the instruction storing unit 1.

At step SI.2, an instruction is read from the instruction storing unit 1.

At step S1.3, the instruction is decoded.

At step S1.4, a corresponding operation is performed according to a control signal obtained by decoding the instruction.

At step S1.5, an operation result is written in a corresponding caching unit.

At step S1.1, an initialized IO instruction for moving subsequent instructions may be stored.

At step SI.2, the read instruction may include, but not be limited to, the CONFIG instruction, the COMPUTE instruction, the IO instruction, the NOP instruction, the JUMP instruction, the MOVE instruction, and the like.

At step S1.3, the control signal for a corresponding module is obtained by decoding according to an operation type of the instruction (CONFIG, COMPUTE, IO, NOP, JUMP, MOVE, and the like). The CONFIG instruction is decoded to obtain configuration information for other modules. The COMPUTE instruction is decoded into control signals for the primary and secondary operating modules which control various discrete data to perform corresponding operations. The IO instruction is decoded to obtain a control signal for the data access module. The NOP instruction does not produce any actual control signals, and is merely configured to clear the control signals in all the control signal caching queues in the device, to ensure that all the instructions before the NOP instruction are executed. The JUMP instruction is decoded into a control signal for a jump of an instruction flow. The MOVE instruction is decoded to obtain a control signal for moving the data in the device.

At step S1.4, the aforementioned units and modules 2 to 6 perform corresponding operations according to the control signals. Taking the COMPUTE instruction configured to perform the reverse training of the neural network supporting the discrete data representation for example, the interconnecting module transmits the input neuron gradient vector [in0, •••, inN] to all the secondary operating modules, and temporarily caches in the neuron caching units supporting the discrete data representation. The i-th secondary operating module adopts an corresponding operation according to the binary representation for the discrete data, and calculates a dot product of a corresponding weight vector [w_i0, •••, w_iN] and the gradient vector. The obtained result is multiplied by the weight and the derivative of the activation function, to obtain the final output neuron gradient vector [out0, out1, out2, •••, outN]. The data, such as the weight and biasing are updated with the weight gradient vector of the intermediate result.

At step S1.5, each module writes the operation result in the corresponding caching unit. Taking the reverse training of the neural network supporting the discrete data representation for example, the output neuron gradient vector obtained by the primary operating module is written in the neuron caching unit. The updated data, such as the weight and biasing are also written in the neuron caching unit.

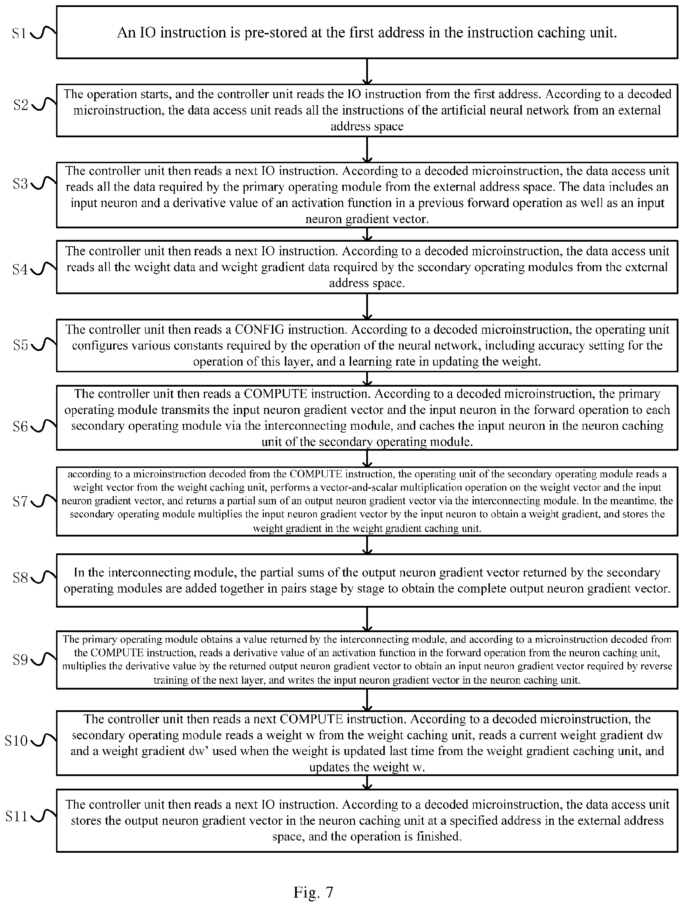

Fig. 7 illustrates another more detailed method for implementing reverse training of a single-layer artificial neural network according to an implementation. The flowchart describes a process of implementing the reverse training of the single-layer neural network as illustrated in Fig. 5 by means of using the device and the instruction set according to the present disclosure.

At step S1, an IO instruction is pre-stored at the first address in the instruction caching unit 1.

At step S2, the operation starts, and the controller unit 2 reads the IO instruction from the first address in the instruction caching unit 1. According to a decoded microinstruction, the data access unit 3 reads all the instructions relating to the reverse training of the single-layer artificial neural network from an external address space, and caches them in the instruction caching unit 1.

At step S3, the controller unit 2 then reads a next IO instruction from the instruction caching unit. According to a decoded microinstruction, the data access unit 3 reads all the data required by the primary operating module 5 from the external address space, and caches in the neuron caching unit 53 of the primary operating module 5. The data includes an input neuron and a derivative value of an activation function in a previous forward operation as well as an input neuron gradient vector. The data supports the discrete representation, and may be all or partially discrete.

At step S4, the controller unit 2 then reads a next 10 instruction from the instruction caching unit. According to a decoded microinstruction, the data access unit 3 reads all the weight data and weight gradient data required by the secondary operating modules 6 from the external address space, and caches in the weight caching unit 64 and the weight gradient caching unit 65 of the corresponding secondary operating module 6, respectively. The data supports the discrete representation, and may be all or partially discrete.

At step S5, the controller unit 2 then reads a CONFIG instruction from the instruction caching unit. According to a decoded microinstruction, the operating unit configures a value of a register therein, according to parameters in a decoded microinstruction. The parameters include various constants required by the operation of the neural network, accuracy setting for the operation of this layer, and a learning rate in updating the weight.

At step S6, the controller unit 2 then reads a COMPUTE instruction from the instruction caching unit. According to a decoded microinstruction, the primary operating module 5 transmits the input neuron gradient vector and the input neuron in the forward operation to each secondary operating module 6 via the interconnecting module 4, and the input neuron gradient vector and the input neuron in the forward operation are cached in the neuron caching unit 63 of the secondary operating module 6.

At step S7, according to a microinstruction decoded from the COMPUTE instruction, the operating unit 61 of the secondary operating module 6 reads a weight vector (a portion of rows in the weight matrix stored in the secondary operating module) from the weight caching unit 64, performs a vector-and-scalar multiplication operation on the weight vector and the input neuron gradient vector, and returns a partial sum of an output neuron gradient vector via the interconnecting module. In the meantime, the secondary operating module 6 multiplies the input neuron gradient vector by the input neuron to obtain a weight gradient, and stores the weight gradient in the weight gradient caching unit 65. For the discrete data representation, the bitwise operations, such as the exclusive-OR operation, may be customizably used to replace the dot product operation or not. For example, in the case of a 1-bit discrete data representation, 0 represents +1 and 1 represents -1. The multiplication operation on the weight is achieved by means of the exclusive-OR operation performed on the sign bit of the data multiplied by the weight.

At step S8, in the interconnecting module 4, the partial sums of the output neuron gradient vector returned by the secondary operating modules 6 are added together in pairs stage by stage to obtain the complete output neuron gradient vector.

At step S9, the primary operating module 5 obtains a value returned by the interconnecting module 4, and according to a microinstruction decoded from the COMPUTE instruction, reads a derivative value of an activation function in the forward operation from the neuron caching unit 53, multiplies the derivative value by the returned output neuron gradient vector to obtain an input neuron gradient vector required by reverse training of the next layer, and writes the input neuron gradient vector in the neuron caching unit 53. Data in this process may be customizably discretely represented or not.

At step S10, the controller unit 2 then reads a next COMPUTE instruction from the instruction caching unit. According to a decoded microinstruction, the secondary operating module 6 reads a weight w from the weight caching unit 64, reads a current weight gradient dw and a weight gradient dw' used when the weight is updated last time from the weight gradient caching unit, and updates the weight w.

At step S11, the controller unit then reads a next IO instruction from the instruction caching unit. According to a decoded microinstruction, the data access unit 3 stores the output neuron gradient vector in the neuron caching unit 53 at a specified address in the external address space, and the operation is finished.

Steps of a batch normalization of the artificial neural network are similar to those in the aforementioned process. According to the provided instruction set, the controller completes the following process. The controller controls the data access unit 3 reading the input gradient data, then controls the primary and secondary operating modules calculating a gradient mean value and a gradient variance of each location according to the size of the batch or uses a preset mean value and a preset variance. Then, the controller subtracts the gradient mean value from a gradient datum of the corresponding location and divides by the gradient variance. Finally, the controller multiplies the processed datum by a learning parameter and adds another learning parameter.

The achieving process of the multilayer artificial neural network is similar to that of the single-layer neural network. After a first layer in the artificial neural network finishes the operation, the operation instruction of a second layer uses the output neuron gradient vector calculated by the primary operating module as the input neuron gradient vector for training of the second layer, and performs the aforementioned operation. The weight address and the weight gradient address in the instruction are changed to the addresses corresponding to the second layer.

The present disclosure adopts the device configured to perform the reverse training of the artificial neural network and the instruction set, so as to solve the problems of insufficient operation performance of CPU and GPU, and high consumption in decoding at the front-end, thereby effectively improving the support for the forward operation of the multilayer artificial neural network.

The present disclosure adopts a dedicated on-chip cache for the reverse training of the multilayer artificial neural network to greatly optimize the reuse of the input neuron and the weight data, so as to avoid repeatedly reading these data from the memory, reduce the times of accessing the memory, and prevent the memory bandwidth from becoming a limitation to the performance of the forward operation of the multilayer artificial neural network.

The present disclosure adopts the discrete data representation, and thus greatly reduces consumption, such as storage energy consumption, of the device and the number of the multiplier components, compared to the successive data representation, such as the floating-point data representation and the fixed-point data representation. A structural arrangement may be optimized in a limited area, so as to improve indicators, such as an operation speed or a ratio of performance to energy consumption.

The present disclosure may be applied to the following fields (including but not limited to): various electronic devices, such as data processing, robots, computers, printers, scanners, phones, tablets computers, smart terminals, mobile phones, drive recorders, navigators, sensors, cameras, cloud servers, image recorders, video recorders, projectors, watches, earphones, removable storage, wearable devices; various vehicles, such as airplanes, ships, automobiles; various household appliance, such as televisions, air conditioners, microwave ovens, refrigerators, rice cookers, humidifiers, washing machines, electric lamps, gas cookers, range hoods; and various medical equipment including nuclear magnetic resonance spectrometers, B-mode ultrasound diagnostic sets, electrocardiographs.

The process or method depicted in the aforementioned accompanying drawings may be performed by a processing logic that comprise hardware (for example, circuitry, dedicated logic), firmware, software (for example, software embodied on a non-transitory computer-readable medium), or a combination thereof. Although the process or method is depicted in terms of certain sequential operations hereinbefore, it should be appreciated that some depicted operations may be performed in different sequences. Furthermore, some operations may be performed in parallel not in sequence. In addition, for the discrete data representation, it should be appreciated that which data to be discretely represented and which data not to be discretely represented may be selected.

In the aforementioned description, various implementations of the present disclosure are described with reference to the specific exemplary implementations. Apparently, various modifications may be made to the various implementations without departing from the scope of the present disclosure as defined in the appended claims. Accordingly, the description and the accompanying drawings are to be considered as illustrative and not limitative.

## Claims

1. A device configured to perform backpropagation training of an artificial neural network supporting discrete data representation, comprising an instruction caching unit, a controller unit, a data access unit, an interconnecting module, a primary operating module, and a plurality of secondary operating modules, wherein
the instruction caching unit is configured to cache an instruction;
the controller unit is configured to read the instruction from the instruction caching unit, and decode the instruction into microinstructions configured to control operations of the interconnecting module, the primary operating module, and the plurality of secondary operating modules;
wherein the interconnecting module comprises an H-tree structure constituting a binary tree path, or an H-tree structure realizing a binary tree path, formed by a plurality of nodes, and wherein each node of the plurality of nodes is configured to transmit upstream data to two downstream nodes, to add data returned from the two downstream nodes together, and to return to an upstream node;
the data access unit is configured to read discretely or successively represented data from a memory and write in corresponding data caching units of the primary operating module and the plurality of secondary operating modules, or read the discretely or successively represented data from the corresponding data caching units and write in the memory;
wherein the successively represented data is data represented in floating-point data or fixed-point data, and the discretely represented data is data represented in natural numbers including zero;
when each layer of the artificial neural network starts backpropagation training, the primary operating module transmits an input neuron gradient vector of the layer to all of the plurality of secondary operating modules via the interconnecting module, and after the plurality of secondary operating modules finish calculations, the interconnecting module adds partial sums of an output neuron gradient vector of the plurality of secondary operating modules together in pairs stage by stage to obtain the output neuron gradient vector of the layer;
the primary operating module is configured to, in a calculation process of each layer, perform subsequent calculations using the output neuron gradient vector of the layer, wherein when input data are mixed data including discrete data and successive data, the primary operating module adopts preset different calculation methods for different discrete data; wherein the input data are input data of the primary operating module; and
each of the plurality of secondary operating modules is configured to use the same input neuron gradient vector and respective discrete or successive weight data to calculate the corresponding partial sum of the output neuron gradient vector in parallel, wherein when the input data are the mixed data including the discrete data and the successive data, the plurality of secondary operating modules adopt preset different calculation methods for the different discrete data;
wherein a binary representation of the discrete data is used as an index, for determining an indexed preset calculation method to be used;
wherein the preset different calculation methods comprise bitwise operations for addition operations, subtraction operations, multiplication operations, and division operations of different discrete data;
wherein the bitwise operations comprise a bitwise arithmetic left shift operation, arithmetic right shift operations, exclusive-OR operations;
wherein the primary operating module includes an operating unit, a data dependency relationship determining unit, and a neuron caching unit supporting the discrete data representation, wherein
the neuron caching unit supporting the discrete data representation is configured to cache the discrete or successive input data and output data used by the primary operating module in a calculation process;
the operating unit performs various operating functions of the primary operating module, wherein when the input data are the mixed data including the discrete data and the successive data, the preset different calculation methods are adopted for the different discrete data;
wherein the operating unit includes an operation determining unit and a mixed data operating unit; when the input data are the mixed data, the operation determining unit determines which operation is performed on the mixed data according to the discrete data included in the mixed data, and then, the mixed data operating unit performs operations according to a result determined by the operation determining unit;
the data dependency relationship determining unit is a port for the operating unit to read from and write in the neuron caching unit, ensures that the successive data or the discrete data in the neuron caching unit do not have reading and writing consistency violation, and reads the input neuron gradient vector from the neuron caching unit, transmits to the plurality of secondary operating modules via the interconnecting module; and
the output neuron gradient vector from the interconnecting module is transmitted to the operating unit;
wherein each of the plurality of secondary operating modules includes an operating unit, a data dependency relationship determining unit, a neuron caching unit supporting the discrete data representation, a weight caching unit supporting the discrete data representation, and a weight gradient caching unit supporting the discrete data representation, wherein
the operating unit is configured to receive the microinstructions transmitted by the controller unit and perform arithmetic logic operations, wherein when the input data are the mixed data including the discrete data and the successive data, the preset different calculation methods are adopted for the different discrete data;
the data dependency relationship determining unit is configured to perform reading and writing operations on the neuron caching unit supporting the discrete data representation, the weight caching unit supporting the discrete data representation, and the weight gradient caching unit supporting the discrete data representation in a calculation process, and ensure that the neuron caching unit supporting the discrete data representation, the weight caching unit supporting the discrete data representation, and the weight gradient caching unit supporting the discrete data representation do not have reading and writing consistency violation;
the neuron caching unit supporting the discrete data representation is configured to cache:
a scalar datum in the data of the input neuron gradient vector supporting the discrete data representation, which corresponds to the secondary operating module, and
the partial sum of the output neuron gradient vector calculated by the secondary operating module;
the weight caching unit supporting the discrete data representation is configured to cache discretely or successively represented weight data required by the secondary operating module in a calculation process, wherein each of the plurality of secondary operating module merely stores a row in a weight matrix corresponding to the scalar datum stored in the secondary operating module; and
the weight gradient caching unit supporting the discrete data representation is configured to cache weight gradient data required by the corresponding secondary operating module when the weight is updated, wherein the weight gradient data stored in each of the plurality of secondary operating module corresponds to the discretely or successively represented weight data stored in the secondary operating module.

2. The device of claim 1, wherein the discrete data representation refers to a representation of replacing real successive data with specified discrete data.

3. The device of claim 1, wherein the plurality of the secondary operating modules use the same input neuron gradient vector to calculate respective weight gradients in parallel, and use the calculated respective weight gradients to update the respective weigh data.

4. The device of claim 1, wherein the primary operating module entrywisely multiplies the output neuron gradient vector of each layer by a derivative value of an activation function of a next layer to obtain an input neuron gradient vector of the next layer.

5. The device of claim 1, wherein the interconnecting module forms a data path for the successive or discrete data between the primary operating module and the plurality of the secondary operating modules.

6. The device of claim 1, wherein the reading and writing consistency violation is ensured by means of determining whether data of microinstructions not executed have a dependency relationship to data of microinstructions being executed;
when the data of the microinstructions not executed do not have the dependency relationship to the data of the microinstructions being executed, the microinstructions are allowed to be transmitted immediately, otherwise the microinstructions not executed are not allowed to be transmitted until all the microinstructions depended on by the microinstructions not executed are executed.

7. The device of claim 1, wherein the operating unit further includes a data type determining unit and at least one of a discrete data operating unit and a successive data operating unit;
when the operating unit includes the discrete data operating unit, and when the input data are merely the discrete data, the discrete data operating unit performs corresponding operations by table look-up according to the input discrete data;
when the operating unit includes the successive data operating unit, and when the input data are merely the successive data, the successive data operating unit performs corresponding operations.

8. The device of claim 1, further comprising a converting module, wherein the converting module includes a pre-processing unit, a distance calculating unit, and a determining unit, and it is assumed that M discrete data are used where M=2^{m}, m≥1, and the discrete data correspond to M values in a preset interval [-zone, zone], respectively,
the pre-processing unit performs a clip (-zone, zone) operation on an input successive datum x, and obtains a pre-processed datum y in the interval [-zone, zone], wherein when x≤-zone, y=-zone; when x≥zone, y=zone; and when -zone<x<zone, y=x;
the distance calculating unit calculates distances between the pre-processed datum y and the values; and
the determining unit calculates discrete data based on the distances and outputs the discrete data.

9. The device of claim 8, wherein
the preset interval [-zone, zone] is [-1, 1] or [-2, 2]; or
absolute values of the M values are reciprocals of powers of 2; or
the determining unit outputs a discrete datum corresponding to a value least distant from the pre-processed datum y, and when two values are identically distant from the pre-processed datum, the determining unit outputs a discrete datum corresponding to any one of the two values; or
the determining unit calculates a normalization probability from the pre-processed datum y to any one of two least distant values, compares the normalization probability corresponding to the one of the two least distant values to a random number ranging from 0 to 1 generated by a random number generating unit, wherein a first discrete datum corresponds to the one of the two least distant values, and a second discrete datum corresponds to the other one of the two least distant values, and outputs the first discrete datum when the random number is less than the probability, otherwise outputs the second discrete datum.

10. A method of performing backpropagation training of an artificial neural network supporting discrete data representation, the method comprising
caching an instruction by an instruction caching unit;
reading, by a controller unit, the instruction from the instruction caching unit, and decoding the instruction into microinstructions configured to control operations of an interconnecting module, a primary operating module, and a plurality of secondary operating modules;
wherein the interconnecting module comprises an H-tree structure constituting a binary tree path, or an H-tree structure realizing a binary tree path, formed by a plurality of nodes, and wherein each node of the plurality of nodes is configured to transmit upstream data to two downstream nodes, to add data returned from the two downstream nodes together, and to return to an upstream node;
reading, by a data access unit, discretely or successively represented data from a memory and writing in corresponding data caching units of the primary operating module and the plurality of secondary operating modules, or reading the discretely or successively represented data from the corresponding data caching units and writing in the memory;
wherein the successively represented data is data represented in floating-point data or fixed-point data, and the discretely represented data is data represented in natural numbers including zero;
when each layer of the artificial neural network starts backpropagation training, the primary operating module transmits an input neuron gradient vector of the layer to all of the plurality of secondary operating modules via the interconnecting module, and after the plurality of secondary operating modules finish calculations, the interconnecting module adds partial sums of an output neuron gradient vector of the plurality of secondary operating modules together in pairs stage by stage to obtain the output neuron gradient vector of the layer;
in a calculation process of each layer, performing, by the primary operating module, subsequent calculations using the output neuron gradient vector of the layer, wherein when input data are mixed data including discrete data and successive data, the primary operating module adopts preset different calculation methods for different discrete data; wherein the input data are input data of the primary operating module; and
using, by each of the plurality of secondary operating modules, the same input neuron gradient vector and respective discrete or successive weight data to calculate the corresponding partial sum of the output neuron gradient vector in parallel, wherein when the input data are the mixed data including the discrete data and the successive data, the plurality of secondary operating modules adopt preset different calculation methods for the different discrete data;
the method further comprising:
determining an indexed preset calculation method to be used by using a binary representation of the discrete data as an index;
wherein the preset different calculation methods comprise bitwise operations for addition operations, subtraction operations, multiplication operations, and division operations of different discrete data;
wherein the bitwise operations comprise a bitwise arithmetic left shift operation, arithmetic right shift operations, exclusive-OR operations;
wherein the primary operating module includes an operating unit, a data dependency relationship determining unit, and a neuron caching unit supporting the discrete data representation,
wherein the method further comprises:
the neuron caching unit supporting the discrete data representation caching the discrete or successive input data and outputting data used by the primary operating module in a calculation process;
the operating unit performing various operating functions of the primary operating module, wherein when the input data are the mixed data including the discrete data and the successive data, the preset different calculation methods are adopted for the different discrete data;
wherein the operating unit includes an operation determining unit and a mixed data operating unit;
wherein the method further comprises:
when the input data are the mixed data, the operation determining unit determining which operation is performed on the mixed data according to the discrete data included in the mixed data, and the mixed data operating unit performing operations according to a result determined by the operation determining unit;
the operating unit reading from and writing in the neuron caching unit by using the data dependency relationship determining unit as a port, to ensure that the successive data or the discrete data in the neuron caching unit do not have reading and writing consistency violation, and the data dependency relationship determining unit reading the input neuron gradient vector from the neuron caching unit, transmitting to the plurality of secondary operating modules via the interconnecting module; and
transmitting the output neuron gradient vector from the interconnecting module to the operating unit;
wherein each of the plurality of secondary operating modules includes an operating unit, a data dependency relationship determining unit, a neuron caching unit supporting the discrete data representation, a weight caching unit supporting the discrete data representation, and a weight gradient caching unit supporting the discrete data representation;
wherein the method further comprises:
the operating unit receiving the microinstructions transmitted by the controller unit and performing arithmetic logic operations, wherein when the input data are the mixed data including the discrete data and the successive data, the preset different calculation methods are adopted for the different discrete data;
the data dependency relationship determining unit performing reading and writing operations on the neuron caching unit supporting the discrete data representation, the weight caching unit supporting the discrete data representation, and the weight gradient caching unit supporting the discrete data representation in a calculation process, and ensuring that the neuron caching unit supporting the discrete data representation, the weight caching unit supporting the discrete data representation, and the weight gradient caching unit supporting the discrete data representation do not have reading and writing consistency violation;
the neuron caching unit supporting the discrete data representation caching a scalar datum in the data of the input neuron gradient vector supporting the discrete data representation which corresponds to the secondary operating module and the partial sum of the output neuron gradient vector calculated by the secondary operating module;
the weight caching unit supporting the discrete data representation caching discretely or successively represented weight data required by the secondary operating module in a calculation process, wherein each of the plurality of secondary operating module merely stores a row in a weight matrix corresponding to the scalar datum stored in the secondary operating module; and
the weight gradient caching unit supporting the discrete data representation caching weight gradient data required by the corresponding secondary operating module when the weight is updated, wherein the weight gradient data stored in each of the plurality of secondary operating module corresponds to the discretely or successively represented weight data stored in the secondary operating module.

11. The method of claim 10, wherein the discrete data representation refers to a representation of replacing real successive data with specified discrete data.

12. The method of claim 10 or 11, further comprising:
the plurality of the secondary operating modules using the same input neuron gradient vector to calculate respective weight gradients in parallel, and using the calculated respective weight gradients to update the respective weigh data.

13. The method of any of the preceding claims 10-12, further comprising:
the primary operating module entrywisely multiplying the output neuron gradient vector of each layer by a derivative value of an activation function of a next layer to obtain an input neuron gradient vector of the next layer.

14. The method of any of the preceding claims 10-13, wherein the interconnecting module forms a data path for the successive or discrete data between the primary operating module and the plurality of the secondary operating modules.

15. The method of claim 10, wherein the reading and writing consistency violation is ensured by means of determining whether data of microinstructions not executed have a dependency relationship to data of microinstructions being executed;
wherein the method further comprises:
when the data of the microinstructions not executed do not have the dependency relationship to the data of the microinstructions being executed, allowing the microinstructions to be transmitted immediately, otherwise the microinstructions not executed are not allowed to be transmitted until all the microinstructions depended on by the microinstructions not executed are executed.

16. The method of claim 10, wherein the operating unit further includes a data type determining unit and at least one of a discrete data operating unit and a successive data operating unit;
wherein the method further comprises:
when the operating unit includes the discrete data operating unit, and when the input data are merely the discrete data, the discrete data operating unit performing corresponding operations by table look-up according to the input discrete data;
when the operating unit includes the successive data operating unit, and when the input data are merely the successive data, the successive data operating unit performing corresponding operations.

17. The method of any of the preceding claims 10-16, further comprising providing a converting module, wherein the converting module includes a pre-processing unit, a distance calculating unit, and a determining unit, and it is assumed that M discrete data are used where M=2^{m}, m≥1, and the discrete data correspond to M values in a preset interval [-zone, zone], respectively;
wherein the method further comprises:
the pre-processing unit performing a clip (-zone, zone) operation on an input successive datum x, and obtaining a pre-processed datum y in the interval [-zone, zone], wherein when x≤-zone, y=-zone; when x≥zone, y=zone; and when -zone<x<zone, y=x;
the distance calculating unit calculating distances between the pre-processed datum y and the values; and
the determining unit calculating discrete data based on the distances and outputting the discrete data.

18. The method of claim 17,
wherein the preset interval [-zone, zone] is [-1, 1] or [-2, 2]; or
wherein absolute values of the M values are reciprocals of powers of 2; or
wherein the method further comprises:
the determining unit outputting a discrete datum corresponding to a value least distant from the pre-processed datum y, and when two values are identically distant from the pre-processed datum, the determining unit outputting a discrete datum corresponding to any one of the two values; or
the determining unit calculating a normalization probability from the pre-processed datum y to any one of two least distant values, comparing the normalization probability corresponding to the one of the two least distant values to a random number ranging from 0 to 1 generated by a random number generating unit, wherein a first discrete datum corresponds to the one of the two least distant values, and a second discrete datum corresponds to the other one of the two least distant values, and outputting the first discrete datum when the random number is less than the probability, otherwise outputting the second discrete datum.

19. A method for performing backpropagation training of a single-layer artificial neural network using the method of any one of claims 10-18.

20. A method for performing backpropagation training of a multilayer artificial neural network according to claim 19, comprising:
performing the method of claim 19 for each layer of the multilayer artificial neural network, wherein after a previous layer in the multilayer artificial neural network finishes the operation, the input neuron gradient vector required by backpropagation training of a next layer and calculated by the primary operating module is used to perform the method of claim 19 again for the next layer.

## Patentansprüche

1. Vorrichtung, die konfiguriert ist, ein Rückausbreitungstraining eines künstlichen neuronalen Netzes, das eine diskrete Datenrepräsentation unterstützt, durchzuführen und eine Befehlszwischenspeichereinheit, eine Steuereinheit, eine Datenzugriffseinheit, ein Verbindungsmodul, ein Hauptarbeitsmodul und mehrere Nebenarbeitsmodule umfasst, wobei
die Befehlszwischenspeichereinheit konfiguriert ist, einen Befehl zwischenzuspeichern;
die Steuereinheit konfiguriert ist, den Befehl aus der Befehlszwischenspeichereinheit zu lesen und den Befehl in Mikrobefehle zu decodieren, die konfiguriert sind, Operationen des Verbindungsmoduls, des Hauptarbeitsmoduls und der mehreren Nebenarbeitsmodule zu steuern;
wobei das Verbindungsmodul eine H-Baumstruktur, die einen Binärbaumpfad bildet, oder eine H-Baumstruktur, die einen Binärbaumpfad realisiert, umfasst, die durch mehrere Knoten gebildet ist, und wobei jeder Knoten der mehreren Knoten konfiguriert ist, stromaufseitige Daten zu zwei stromabseitigen Knoten zu senden und Daten, die von den zwei stromabseitigen Knoten zurückgeführt wurden, zu addieren und zu einem stromaufseitigen Knoten zurückzuführen;
die Datenzugriffseinheit konfiguriert ist, diskret oder nacheinander repräsentierte Daten aus einem Speicher zu lesen und in entsprechende Datenzwischenspeichereinheiten des Hauptarbeitsmoduls und der mehreren Nebenarbeitsmodule zu schreiben oder die diskret oder nacheinander repräsentierten Daten aus den entsprechenden Datenzwischenspeichereinheiten zu lesen und in den Speicher zu schreiben;
wobei die nacheinander repräsentierten Daten Daten sind, die in Gleitkommadaten oder Festkommadaten repräsentiert sind, und die diskret repräsentierten Daten Daten sind, die in natürlichen Zahlen einschließlich null repräsentiert sind;
dann, wenn jede Schicht des künstlichen neuronalen Netzes ein Rückausbreitungstraining startet, das Hauptarbeitsmodul einen Eingangsneuronen-Gradientenvektor der Schicht mittels des Verbindungsmoduls zu allen der mehreren Nebenarbeitsmodule sendet und das Verbindungsmodul, nachdem die mehreren Nebenarbeitsmodule Berechnungen abgeschlossen haben, Teilsummen eines Ausgangsneuronen-Gradientenvektors der mehreren Nebenarbeitsmodule in Paaren stufenweise addiert, um den Ausgangsneuronen-Gradientenvektor der Schicht zu erhalten;
das Hauptarbeitsmodul konfiguriert ist, in einem Berechnungsprozess jeder Schicht nachfolgende Berechnungen unter Verwendung des Ausgangsneuronen-Gradientenvektors der Schicht durchzuführen, wobei dann, wenn Eingangsdaten gemischte Daten, die diskrete Daten und aufeinanderfolgende Daten enthalten, sind, das Hauptarbeitsmodul voreingestellte verschiedene Berechnungsverfahren für verschiedene diskrete Daten anwendet; wobei die Eingangsdaten Eingangsdaten des Hauptarbeitsmoduls sind; und
jedes der mehreren Nebenarbeitsmodule konfiguriert ist, denselben Eingangsneuronen-Gradientenvektor und jeweilige diskrete oder aufeinanderfolgende Gewichtsdaten zu verwenden, um die entsprechende Teilsumme des Ausgangsneuronen-Gradientenvektors parallel zu berechnen, wobei dann, wenn die Eingangsdaten die gemischten Daten, die die diskreten Daten und die aufeinanderfolgenden Daten enthalten, sind, die mehreren Nebenarbeitsmodule voreingestellte verschiedene Berechnungsverfahren für die verschiedenen diskreten Daten anwenden;
wobei eine Binärrepräsentation der diskreten Daten als ein Index verwendet wird, um ein indiziertes voreingestelltes Berechnungsverfahren, das verwendet werden soll, zu bestimmen;
wobei die voreingestellten verschiedenen Berechnungsverfahren bitweise Operationen für Additionsoperationen, Subtraktionsoperationen, Multiplikationsoperationen und Divisionsoperationen verschiedener diskreter Daten umfassen;
wobei die bitweisen Operationen eine bitweise arithmetische Linksverschiebungsoperation, arithmetische Rechtsverschiebungsoperationen und exklusive ODER-Operationen umfassen;
wobei das Hauptarbeitsmodul eine Arbeitseinheit, eine Datenabhängigkeitsbeziehungs-Bestimmungseinheit und eine Neuronenzwischenspeichereinheit, die die diskrete Datenrepräsentation unterstützt, enthält, wobei
die Neuronenzwischenspeichereinheit, die die diskrete Datenrepräsentation unterstützt, konfiguriert ist, die diskreten oder aufeinanderfolgenden Eingangsdaten und Ausgangsdaten, die durch das Hauptarbeitsmodul in einem Berechnungsprozess verwendet werden, zwischenzuspeichern;
die Arbeitseinheit verschiedene Arbeitsfunktionen des Hauptarbeitsmoduls durchführt, wobei dann, wenn die Eingangsdaten die gemischten Daten, die die diskreten Daten und die aufeinanderfolgenden Daten enthalten, sind, die voreingestellten verschiedenen Berechnungsverfahren auf die verschiedenen diskreten Daten angewendet werden;
wobei die Arbeitseinheit eine Operationsbestimmungseinheit und eine Arbeitseinheit für gemischte Daten enthält; dann, wenn die Eingangsdaten die gemischten Daten sind, die Operationsbestimmungseinheit gemäß den diskreten Daten, die in den gemischten Daten enthalten sind, bestimmt, welche Operation an den gemischten Daten durchgeführt wird, und dann die Arbeitseinheit für gemischte Daten Operationen gemäß einem Ergebnis, das durch die Operationsbestimmungseinheit bestimmt wird, durchführt;
die Datenabhängigkeitsbeziehungs-Bestimmungseinheit ein Anschluss ist, damit die Arbeitseinheit von der Neuronenzwischenspeichereinheit lesen und in sie schreiben kann, sicherstellt, dass die aufeinanderfolgenden Daten oder die diskreten Daten in der Neuronenzwischenspeichereinheit keine Lese- und Schreibkonsistenzverletzung aufweisen, und den Eingangsneuronen-Gradientenvektor aus der Neuronenzwischenspeichereinheit liest und mittels des Verbindungsmoduls zu den mehreren Nebenarbeitsmodulen sendet; und
der Ausgangsneuronen-Gradientenvektor vom Verbindungsmodul zur Arbeitseinheit gesendet wird;
wobei jedes der mehreren Nebenarbeitsmodule eine Arbeitseinheit, eine Datenabhängigkeitsbeziehungs-Bestimmungseinheit, eine Neuronenzwischenspeichereinheit, die die diskrete Datenrepräsentation unterstützt, eine Gewichtszwischenspeichereinheit, die die diskrete Datenrepräsentation unterstützt, und eine Gewichtsgradienten-Zwischenspeichereinheit, die die diskrete Datenrepräsentation unterstützt, enthält, wobei
die Arbeitseinheit konfiguriert ist, die Mikrobefehle, die durch die Steuereinheit gesendet wurden, zu empfangen und Arithmetik/Logik-Operationen durchzuführen, wobei dann, wenn die Eingangsdaten die gemischten Daten, die die diskreten Daten und die aufeinanderfolgenden Daten enthalten, sind, die voreingestellten verschiedenen Berechnungsverfahren auf die verschiedenen diskreten Daten angewendet werden;
die Datenabhängigkeitsbeziehungs-Bestimmungseinheit konfiguriert ist, Lese- und Schreiboperationen in die Neuronenzwischenspeichereinheit, die die diskrete Datenrepräsentation unterstützt, die Gewichtszwischenspeichereinheit, die die diskrete Datenrepräsentation unterstützt, und die Gewichtsgradienten-Zwischenspeichereinheit, die die diskrete Datenrepräsentation unterstützt, in einem Berechnungsprozess durchzuführen und sicherzustellen, dass die Neuronenzwischenspeichereinheit, die die diskrete Datenrepräsentation unterstützt, die Gewichtszwischenspeichereinheit, die die diskrete Datenrepräsentation unterstützt, und die Gewichtsgradienten-Zwischenspeichereinheit, die die diskrete Datenrepräsentation unterstützt, keine Lese-und Schreibkonsistenzverletzung aufweisen;
die Neuronenzwischenspeichereinheit, die die diskrete Datenrepräsentation unterstützt, konfiguriert ist, Folgendes zwischenzuspeichern:
skalare Daten in den Daten des Eingangsneuronen-Gradientenvektors, der die diskrete Datenrepräsentation unterstützt, das dem Nebenarbeitsmodul entspricht, und
die Teilsumme des Ausgangsneuronen-Gradientenvektors, die durch das Nebenarbeitsmodul berechnet wurde;
die Gewichtszwischenspeichereinheit, die die diskrete Datenrepräsentation unterstützt, konfiguriert ist, diskret oder nacheinander repräsentierte Gewichtsdaten, die für das Nebenarbeitsmodul in einem Berechnungsprozess erforderlich sind, zwischenzuspeichern, wobei jedes der mehreren Nebenarbeitsmodule lediglich eine Zeile in einer Gewichtsmatrix, die den skalaren Daten, die im Nebenarbeitsmodul gespeichert sind, entspricht, speichert; und
die Gewichtsgradienten-Zwischenspeichereinheit, die die diskrete Datenrepräsentation unterstützt, konfiguriert ist, Gewichtsgradientendaten, die für das entsprechende Nebenarbeitsmodul erforderlich sind, wenn das Gewicht aktualisiert wird, zwischenzuspeichern, wobei die Gewichtsgradientendaten, die in jedem der mehreren Nebenarbeitsmodule gespeichert sind, den diskret oder nacheinander repräsentierten Gewichtsdaten, die im Nebenarbeitsmodul gespeichert sind, entsprechen.

2. Vorrichtung nach Anspruch 1, wobei die diskrete Datenrepräsentation sich auf eine Repräsentation des Ersetzens real aufeinanderfolgender Daten durch festgelegte diskrete Daten bezieht.

3. Vorrichtung nach Anspruch 1, wobei die mehreren Nebenarbeitsmodule denselben Eingangsneuronen-Gradientenvektor verwenden, um jeweilige Gewichtsgradienten parallel zu berechnen, und die berechneten jeweiligen Gewichtsgradienten verwenden, um die jeweiligen Gewichtsdaten zu aktualisieren.

4. Vorrichtung nach Anspruch 1, wobei das Hauptarbeitsmodul den Ausgangsneuronen-Gradientenvektor jeder Schicht mit einem Ableitungswert einer Aktivierungsfunktion einer nächsten Schicht eintragsweise multipliziert, um einen Eingangsneuronen-Gradientenvektor der nächsten Schicht zu erhalten.

5. Vorrichtung nach Anspruch 1, wobei das Verbindungsmodul einen Datenpfad für die aufeinanderfolgenden oder diskreten Daten zwischen dem Hauptarbeitsmodul und den mehreren Nebenarbeitsmodulen bildet.

6. Vorrichtung nach Anspruch 1, wobei die Lese- und Schreibkonsistenzverletzung mittels eines Bestimmens sichergestellt wird, ob Daten von Mikrobefehlen, die nicht ausgeführt werden, eine Abhängigkeitsbeziehung zu Daten von Mikrobefehlen, die ausgeführt werden, besitzen;
dann, wenn die Daten der Mikrobefehle, die nicht ausgeführt werden, keine Abhängigkeitsbeziehung zu den Daten der Mikrobefehle, die ausgeführt werden, besitzen, ermöglicht wird, dass die Mikrobefehle unmittelbar gesendet werden, und sonst nicht ermöglicht wird, dass die Mikrobefehle, die nicht ausgeführt werden, gesendet werden, bis alle Mikrobefehle, auf die die Mikrobefehle, die nicht ausgeführt werden, angewiesen sind, ausgeführt worden sind.

7. Vorrichtung nach Anspruch 1, wobei die Arbeitseinheit ferner eine Datentypbestimmungseinheit und eine Arbeitseinheit für diskrete Daten und/oder eine Arbeitseinheit für aufeinanderfolgende Daten enthält;
dann, wenn die Arbeitseinheit die Arbeitseinheit für diskrete Daten enthält, und wenn die Eingangsdaten lediglich die diskreten Daten sind, die Arbeitseinheit für diskrete Daten entsprechende Operationen durch Nachschlagen in einer Tabelle gemäß den eingegebenen diskreten Daten durchführt;
dann, wenn die Arbeitseinheit die Arbeitseinheit für aufeinanderfolgende Daten enthält, und wenn die Eingangsdaten lediglich die aufeinanderfolgenden Daten sind, die Arbeitseinheit für aufeinanderfolgende Daten entsprechende Operationen durchführt.

8. Vorrichtung nach Anspruch 1, die ferner ein Umsetzmodul umfasst, wobei das Umsetzmodul eine Vorverarbeitungseinheit, eine Entfernungsberechnungseinheit und eine Bestimmungseinheit enthält und angenommen wird, dass M diskrete Datenelemente verwendet werden, wobei M = 2^{m}, m ≥ 1 und die diskreten Daten jeweils M Werten in einem voreingestellten Intervall [-Bereich, Bereich] entsprechen,
die Vorverarbeitungseinheit eine (-Bereich, Bereich)-Ausschnittoperation an einem eingegebenen aufeinanderfolgenden Datum x durchführt und ein vorverarbeitetes Datum y im Intervall [-Bereich, Bereich] erhält, wobei dann, wenn x ≤ -Bereich, y = -Bereich; dann, wenn x ≥ Bereich, y = Bereich; und dann, wenn - Bereich < x < Bereich, y = x;
die Entfernungsberechnungseinheit Entfernungen zwischen dem vorverarbeiteten Datum y und den Werten berechnet; und
die Bestimmungseinheit diskrete Daten auf der Grundlage der Entfernungen berechnet und die diskreten Daten ausgibt.

9. Vorrichtung nach Anspruch 8, wobei
das voreingestellte Intervall [-Bereich, Bereich] gleich [-1, 1] oder [-2, 2] ist; oder
Beträge der M Werte Kehrwerte von Potenzen von 2 sind; oder
die Bestimmungseinheit ein diskretes Datum ausgibt, das einem Wert entspricht, der am wenigsten weit vom vorverarbeiteten Datum y entfernt ist, und dann, wenn zwei Werte gleich weit vom vorverarbeiteten Datum entfernt sind, die Bestimmungseinheit ein diskretes Datum ausgibt, das einem der zwei Werte entspricht; oder
die Bestimmungseinheit eine Normierungswahrscheinlichkeit vom vorverarbeiteten Datum y zu einem der zwei am wenigsten weit entfernten Werte berechnet, die Normierungswahrscheinlichkeit, die dem einen der zwei am wenigsten weit entfernten Werte entspricht, mit einer Zufallsanzahl im Bereich von 0 bis 1, die durch eine Zufallszahlerzeugungseinheit erzeugt wurde, vergleicht, wobei ein erstes diskretes Datum dem einen der zwei am wenigsten weit entfernten Werte entspricht und ein zweites diskretes Datum dem weiteren der zwei am wenigsten weit entfernten Werte entspricht, und das erste diskrete Datum ausgibt, wenn die Zufallsanzahl kleiner als die Wahrscheinlichkeit ist, und sonst das zweite diskrete Datum ausgibt.

10. Verfahren zum Durchführen eines Rückausbreitungstrainings eines künstlichen neuronalen Netzes, das eine diskrete Datenrepräsentation unterstützt, wobei das Verfahren Folgendes umfasst:
Zwischenspeichern eines Befehls durch eine Befehlszwischenspeichereinheit;
Lesen durch eine Steuereinheit des Befehls aus der Befehlszwischenspeichereinheit und Decodieren des Befehls in Mikrobefehle, die konfiguriert sind, Operationen eines Verbindungsmoduls, eines Hauptarbeitsmoduls und mehrerer Nebenarbeitsmodule zu steuern;
wobei das Verbindungsmodul eine H-Baumstruktur, die einen Binärbaumpfad bildet, oder eine H-Baumstruktur, die einen Binärbaumpfad realisiert, umfasst, die durch mehrere Knoten gebildet ist, und wobei jeder Knoten der mehreren Knoten konfiguriert ist, stromaufseitige Daten zu zwei stromabseitigen Knoten zu senden und Daten, die von den zwei stromabseitigen Knoten zurückgeführt wurden, zu addieren und zu einem stromaufseitigen Knoten zurückzuführen;
Lesen durch eine Datenzugriffseinheit diskret oder nacheinander repräsentierter Daten aus einem Speicher und Schreiben in entsprechende Datenzwischenspeichereinheiten des Hauptarbeitsmoduls und der mehreren Nebenarbeitsmodule oder Lesen der diskret oder nacheinander repräsentierten Daten aus den entsprechenden Datenzwischenspeichereinheiten und Schreiben in den Speicher;
wobei die nacheinander repräsentierten Daten Daten sind, die in Gleitkommadaten oder Festkommadaten repräsentiert sind, und die diskret repräsentierten Daten Daten sind, die in natürlichen Zahlen einschließlich null repräsentiert sind;
dann, wenn jede Schicht des künstlichen neuronalen Netzes ein Rückausbreitungstraining startet, das Hauptarbeitsmodul einen Eingangsneuronen-Gradientenvektor der Schicht mittels des Verbindungsmoduls zu allen der mehreren Nebenarbeitsmodule sendet und das Verbindungsmodul, nachdem die mehreren Nebenarbeitsmodule Berechnungen abgeschlossen haben, Teilsummen eines Ausgangsneuronen-Gradientenvektors der mehreren Nebenarbeitsmodule in Paaren stufenweise addiert, um den Ausgangsneuronen-Gradientenvektor der Schicht zu erhalten;
Durchführen durch das Hauptarbeitsmodul in einem Berechnungsprozess jeder Schicht nachfolgender Berechnungen unter Verwendung des Ausgangsneuronen-Gradientenvektors der Schicht, wobei dann, wenn Eingangsdaten gemischte Daten, die diskrete Daten und aufeinanderfolgende Daten enthalten, sind, das Hauptarbeitsmodul voreingestellte verschiedene Berechnungsverfahren für verschiedene diskrete Daten anwendet; wobei die Eingangsdaten Eingangsdaten des Hauptarbeitsmoduls sind; und
Verwenden durch jedes der mehreren Nebenarbeitsmodule desselben Eingangsneuronen-Gradientenvektors und jeweiliger diskreter oder aufeinanderfolgender Gewichtsdaten, um die entsprechende Teilsumme des Ausgangsneuronen-Gradientenvektors parallel zu berechnen, wobei dann, wenn die Eingangsdaten die gemischten Daten, die die diskreten Daten und die aufeinanderfolgenden Daten enthalten, sind, die mehreren Nebenarbeitsmodule voreingestellte verschiedene Berechnungsverfahren für die verschiedenen diskreten Daten anwenden;
wobei das Verfahren ferner Folgendes umfasst:
Bestimmen eines indizierten voreingestellten Berechnungsverfahrens, das unter Verwendung einer Binärrepräsentation der diskreten Daten als ein Index verwendet werden soll;
wobei die voreingestellten verschiedenen Berechnungsverfahren bitweise Operationen für Additionsoperationen, Subtraktionsoperationen, Multiplikationsoperationen und Divisionsoperationen verschiedener diskreter Daten umfassen;
wobei die bitweisen Operationen eine bitweise arithmetische Linksverschiebungsoperation, arithmetische Rechtsverschiebungsoperationen und exklusive ODER-Operationen umfassen;
wobei das Hauptarbeitsmodul eine Arbeitseinheit, eine Datenabhängigkeitsbeziehungs-Bestimmungseinheit und eine Neuronenzwischenspeichereinheit, die die diskrete Datenrepräsentation unterstützt, enthält,
wobei das Verfahren ferner Folgendes umfasst:
Zwischenspeichern durch die Neuronenzwischenspeichereinheit, die die diskrete Datenrepräsentation unterstützt, der diskreten oder aufeinanderfolgenden Eingangsdaten und Ausgangsdaten, die durch das Hauptarbeitsmodul in einem Berechnungsprozess verwendet werden;
Durchführen durch die Arbeitseinheit verschiedener Arbeitsfunktionen des Hauptarbeitsmoduls, wobei dann, wenn die Eingangsdaten die gemischten Daten, die die diskreten Daten und die aufeinanderfolgenden Daten enthalten, sind, die voreingestellten verschiedenen Berechnungsverfahren auf die verschiedenen diskreten Daten angewendet werden;
wobei die Arbeitseinheit eine Operationsbestimmungseinheit und eine Arbeitseinheit für gemischte Daten enthält;
wobei das Verfahren ferner Folgendes umfasst:
Bestimmen dann, wenn die Eingangsdaten die gemischten Daten sind, durch die Operationsbestimmungseinheit gemäß den diskreten Daten, die in den gemischten Daten enthalten sind, welche Operation an den gemischten Daten durchgeführt wird, und dann Durchführen durch die Arbeitseinheit für gemischte Daten von Operationen gemäß einem Ergebnis, das durch die Operationsbestimmungseinheit bestimmt wird;
Lesen von der Neuronenzwischenspeichereinheit und Schreiben in sie durch die Arbeitseinheit unter Verwendung der Datenabhängigkeitsbeziehungs-Bestimmungseinheit als ein Anschluss, Sicherstellen, dass die aufeinanderfolgenden Daten oder die diskreten Daten in der Neuronenzwischenspeichereinheit keine Lese-und Schreibkonsistenzverletzung aufweisen, und Lesen durch die Datenabhängigkeitsbeziehungs-Bestimmungseinheit des Eingangsneuronen-Gradientenvektors aus der Neuronenzwischenspeichereinheit und Senden zu den mehreren Nebenarbeitsmodulen mittels des Verbindungsmoduls; und
Senden des Ausgangsneuronen-Gradientenvektors vom Verbindungsmodul zur Arbeitseinheit;
wobei jedes der mehreren Nebenarbeitsmodule eine Arbeitseinheit, eine Datenabhängigkeitsbeziehungs-Bestimmungseinheit, eine Neuronenzwischenspeichereinheit, die die diskrete Datenrepräsentation unterstützt, eine Gewichtszwischenspeichereinheit, die die diskrete Datenrepräsentation unterstützt, und eine Gewichtsgradienten-Zwischenspeichereinheit, die die diskrete Datenrepräsentation unterstützt, enthält;
wobei das Verfahren ferner Folgendes umfasst:
durch die Arbeitseinheit Empfangen der Mikrobefehle, die durch die Steuereinheit gesendet wurden, und Durchführen von Arithmetik/Logik-Operationen, wobei dann, wenn die Eingangsdaten die gemischten Daten, die die diskreten Daten und die aufeinanderfolgenden Daten enthalten, sind, die voreingestellten verschiedenen Berechnungsverfahren auf die verschiedenen diskreten Daten angewendet werden;
durch die Datenabhängigkeitsbeziehungs-Bestimmungseinheit Durchführen von Lese- und Schreiboperationen in die Neuronenzwischenspeichereinheit, die die diskrete Datenrepräsentation unterstützt, die Gewichtszwischenspeichereinheit, die die diskrete Datenrepräsentation unterstützt, und die Gewichtsgradienten-Zwischenspeichereinheit, die die diskrete Datenrepräsentation unterstützt, in einem Berechnungsprozess und Sicherstellen, dass die Neuronenzwischenspeichereinheit, die die diskrete Datenrepräsentation unterstützt, die Gewichtszwischenspeichereinheit, die die diskrete Datenrepräsentation unterstützt, und die Gewichtsgradienten-Zwischenspeichereinheit, die die diskrete Datenrepräsentation unterstützt, keine Lese-und Schreibkonsistenzverletzung aufweisen;
Zwischenspeichern durch die Neuronenzwischenspeichereinheit, die die diskrete Datenrepräsentation unterstützt, skalarer Daten in den Daten des Eingangsneuronen-Gradientenvektors, der die diskrete Datenrepräsentation unterstützt, das dem Nebenarbeitsmodul entspricht, und der Teilsumme des Ausgangsneuronen-Gradientenvektors, die durch das Nebenarbeitsmodul berechnet wurde;
Zwischenspeichern durch die Gewichtszwischenspeichereinheit, die die diskrete Datenrepräsentation unterstützt, diskret oder nacheinander repräsentierter Gewichtsdaten, die für das Nebenarbeitsmodul in einem Berechnungsprozess erforderlich sind, wobei jedes der mehreren Nebenarbeitsmodule lediglich eine Zeile in einer Gewichtsmatrix, die den skalaren Daten, die im Nebenarbeitsmodul gespeichert sind, entspricht, speichert; und
Zwischenspeichern durch die Gewichtsgradienten-Zwischenspeichereinheit, die die diskrete Datenrepräsentation unterstützt, von Gewichtsgradientendaten, die für das entsprechende Nebenarbeitsmodul erforderlich sind, wenn das Gewicht aktualisiert wird, wobei die Gewichtsgradientendaten, die in jedem der mehreren Nebenarbeitsmodule gespeichert sind, den diskret oder nacheinander repräsentierten Gewichtsdaten, die im Nebenarbeitsmodul gespeichert sind, entsprechen.

11. Verfahren nach Anspruch 10, wobei die diskrete Datenrepräsentation sich auf eine Repräsentation des Ersetzens real aufeinanderfolgender Daten durch festgelegte diskrete Daten bezieht.

12. Verfahren nach Anspruch 10 oder 11, das ferner Folgendes umfasst:
durch die mehreren Nebenarbeitsmodule Verwenden desselben Eingangsneuronen-Gradientenvektors, um jeweilige Gewichtsgradienten parallel zu berechnen, und Verwenden der berechneten jeweiligen Gewichtsgradienten, um die jeweiligen Gewichtsdaten zu aktualisieren.

13. Verfahren nach einem der vorhergehenden Ansprüche 10-12, das ferner Folgendes umfasst:
eintragsweise Multiplizieren durch das Hauptarbeitsmodul des Ausgangsneuronen-Gradientenvektors jeder Schicht mit einem Ableitungswert einer Aktivierungsfunktion einer nächsten Schicht, um einen Eingangsneuronen-Gradientenvektor der nächsten Schicht zu erhalten.

14. Verfahren nach einem der vorhergehenden Ansprüche 10-13, wobei das Verbindungsmodul einen Datenpfad für die aufeinanderfolgenden oder diskreten Daten zwischen dem Hauptarbeitsmodul und den mehreren Nebenarbeitsmodulen bildet.

15. Verfahren nach Anspruch 10, wobei die Lese- und Schreibkonsistenzverletzung mittels eines Bestimmens sichergestellt wird, ob Daten von Mikrobefehlen, die nicht ausgeführt werden, eine Abhängigkeitsbeziehung zu Daten von Mikrobefehlen, die ausgeführt werden, besitzen;
wobei das Verfahren ferner Folgendes umfasst:
dann, wenn die Daten der Mikrobefehle, die nicht ausgeführt werden, keine Abhängigkeitsbeziehung zu den Daten der Mikrobefehle, die ausgeführt werden, besitzen, Ermöglichen, dass die Mikrobefehle unmittelbar gesendet werden, und sonst wird nicht ermöglicht, dass die Mikrobefehle, die nicht ausgeführt werden, gesendet werden, bis alle Mikrobefehle, auf die die Mikrobefehle, die nicht ausgeführt werden, angewiesen sind, ausgeführt worden sind.

16. Verfahren nach Anspruch 10, wobei die Arbeitseinheit ferner eine Datentypbestimmungseinheit und eine Arbeitseinheit für diskrete Daten und/oder eine Arbeitseinheit für aufeinanderfolgende Daten enthält;
wobei das Verfahren ferner Folgendes umfasst:
dann, wenn die Arbeitseinheit die Arbeitseinheit für diskrete Daten enthält, und wenn die Eingangsdaten lediglich die diskreten Daten sind, Durchführen durch die Arbeitseinheit für diskrete Daten entsprechender Operationen durch Nachschlagen in einer Tabelle gemäß den eingegebenen diskreten Daten;
dann, wenn die Arbeitseinheit die Arbeitseinheit für aufeinanderfolgende Daten enthält, und wenn die Eingangsdaten lediglich die aufeinanderfolgenden Daten sind, Durchführen durch die Arbeitseinheit für aufeinanderfolgende Daten entsprechender Operationen.

17. Verfahren nach einem der vorhergehenden Ansprüche 10-16, das ferner ein Bereitstellen eines Umsetzmoduls umfasst, wobei das Umsetzmodul eine Vorverarbeitungseinheit, eine Entfernungsberechnungseinheit und eine Bestimmungseinheit enthält und angenommen wird, dass M diskrete Datenelemente verwendet werden, wobei M = 2^{m}, m ≥ 1 und die diskreten Daten jeweils M Werten in einem voreingestellten Intervall [-Bereich, Bereich] entsprechen;
wobei das Verfahren ferner Folgendes umfasst:
durch die Vorverarbeitungseinheit Durchführen einer (-Bereich, Bereich)-Ausschnittoperation an einem eingegebenen aufeinanderfolgenden Datum x und Erhalten eines vorverarbeiteten Datums y im Intervall [-Bereich, Bereich], wobei dann, wenn x ≤ -Bereich, y = -Bereich; dann, wenn x ≥ Bereich, y = Bereich; und dann, wenn - Bereich < x < Bereich, y = x;
die Entfernungsberechnungseinheit Entfernungen zwischen dem vorverarbeiteten Datum y und den Werten berechnet; und
die Bestimmungseinheit diskrete Daten auf der Grundlage der Entfernungen berechnet und die diskreten Daten ausgibt.

18. Verfahren nach Anspruch 17, wobei
das voreingestellte Intervall [-Bereich, Bereich] gleich [-1, 1] oder [-2, 2] ist; oder
Beträge der M Werte Kehrwerte von Potenzen von 2 sind; oder
wobei das Verfahren ferner Folgendes umfasst:
Ausgeben durch die Bestimmungseinheit eines diskreten Datums, das einem Wert entspricht, der am wenigsten weit vom vorverarbeiteten Datum y entfernt ist, und dann, wenn zwei Werte gleich weit vom vorverarbeiteten Datum entfernt sind, Ausgeben durch die Bestimmungseinheit eines diskreten Datums, das einem der zwei Werte entspricht; oder
durch die Bestimmungseinheit Berechnen einer Normierungswahrscheinlichkeit vom vorverarbeiteten Datum y zu einem der zwei am wenigsten weit entfernten Werte, Vergleichen der Normierungswahrscheinlichkeit, die dem einen der zwei am wenigsten weit entfernten Werte entspricht, mit einer Zufallsanzahl im Bereich von 0 bis 1, die durch eine Zufallszahlerzeugungseinheit erzeugt wurde, wobei ein erstes diskretes Datum dem einen der zwei am wenigsten weit entfernten Werte entspricht und ein zweites diskretes Datum dem weiteren der zwei am wenigsten weit entfernten Werte entspricht, und Ausgeben des ersten diskreten Datums, wenn die Zufallsanzahl kleiner als die Wahrscheinlichkeit ist, und sonst Ausgeben des zweiten diskreten Datums.

19. Verfahren zum Durchführen eines Rückausbreitungstrainings eines einschichtigen künstlichen neuronalen Netzes unter Verwendung des Verfahrens nach einem der Ansprüche 10-18.

20. Verfahren zum Durchführen eines Rückausbreitungstrainings eines mehrschichtigen künstlichen neuronalen Netzes nach Anspruch 19, das Folgendes umfasst:
Durchführen des Verfahrens nach Anspruch 19 für jede Schicht des mehrschichtigen künstlichen neuronalen Netzes, wobei, nachdem eine vorhergehende Schicht im mehrschichtigen künstlichen neuronalen Netz die Operation abgeschlossen hat, der Eingangsneuronen-Gradientenvektor, der durch das Rückausbreitungstraining einer nächsten Schicht benötigt wird und durch das Hauptarbeitsmodul berechnet wurde, verwendet wird, um das Verfahren nach Anspruch 19 für die nächste Schicht erneut durchzuführen.

## Revendications

1. Dispositif configuré pour effectuer un apprentissage par rétropropagation d'un réseau neuronal artificiel prenant en charge une représentation de données discrètes, le dispositif comprenant une unité de mise en mémoire cache d'instructions, une unité de contrôleur, une unité d'accès aux données, un module d'interconnexion, un module d'exploitation principal et une pluralité de modules d'exploitation secondaires, où :
l'unité de mise en mémoire cache d'instructions est configurée pour mettre en mémoire cache une instruction ;
l'unité de contrôleur est configurée pour lire l'instruction à partir de l'unité de mise en mémoire cache d'instructions, et décoder l'instruction en micro-instructions configurées pour contrôler des opérations du module d'interconnexion, du module d'exploitation primaire, et de la pluralité de modules d'exploitation secondaires ;
où le module d'interconnexion comprend une structure d'arbre en H constituant un chemin d'arbre binaire, ou une structure d'arbre en H réalisant un chemin d'arbre binaire, formé par une pluralité de nœuds, et où chaque nœud de la pluralité de nœuds est configuré pour transmettre des données amont à deux nœuds aval, pour additionner ensemble les données renvoyées par les deux nœuds aval, et pour revenir à un nœud amont ;
l'unité d'accès aux données est configurée pour lire des données représentées de manière discrète ou successive à partir d'une mémoire, et écrire dans des unités de mise en mémoire cache de données correspondantes du module d'exploitation principal et de la pluralité de modules d'exploitation secondaires, ou lire les données représentées de manière discrète ou successive à partir des unités de mise en mémoire cache de données correspondantes et écrire dans la mémoire ;
où les données représentées de manière successive sont des données représentées sous forme de données à virgule flottante ou sous forme de données à virgule fixe, et les données représentées de manière discrète sont des données représentées sous forme de nombres naturels, y compris zéro ;
lorsque chaque couche du réseau neuronal artificiel commence l'apprentissage par rétropropagation, le module d'exploitation primaire transmet un vecteur de gradient de neurones d'entrée de la couche à l'ensemble de la pluralité de modules d'exploitation secondaires par l'intermédiaire du module d'interconnexion et, après que la pluralité de modules d'exploitation secondaires a terminé les calculs, le module d'interconnexion ajoute ensemble les sommes partielles d'un vecteur de gradient de neurones de sortie de la pluralité de modules d'exploitation secondaires, par paires, étape par étape, pour obtenir le vecteur de gradient de neurones de sortie de la couche ;
le module d'exploitation primaire est configuré pour, dans un processus de calcul de chaque couche, effectuer des calculs ultérieurs en utilisant le vecteur de gradient de neurones de sortie de la couche, où, lorsque les données d'entrée sont des données mélangées comprenant des données discrètes et des données successives, le module d'exploitation primaire adopte des procédés de calcul différents prédéfinis pour différentes données discrètes ; où les données d'entrée sont des données d'entrée du module d'exploitation primaire ; et
chacun de la pluralité de modules d'exploitation secondaires est configuré pour utiliser le même vecteur de gradient de neurones d'entrée et des données de poids discrètes ou successives respectives pour calculer la somme partielle correspondante du vecteur de gradient de neurones de sortie, en parallèle, où, lorsque les données d'entrée sont les données mélangées comprenant les données discrètes et les données successives, la pluralité de modules d'exploitation secondaires adoptent des procédés de calcul différents prédéfinis pour les différentes données discrètes ;
où une représentation binaire des données discrètes est utilisée comme un index, pour déterminer un procédé de calcul prédéfini indexé à utiliser ;
où les différents procédés de calcul prédéfinis comprennent des opérations au niveau des bits pour des opérations d'addition, des opérations de soustraction, des opérations de multiplication et des opérations de division de différentes données discrètes ;
où les opérations au niveau des bits comprennent une opération de décalage arithmétique à gauche, des opérations de décalage arithmétique à droite, des opérations OU exclusif ;
où le module d'exploitation primaire comprend une unité d'exploitation, une unité de détermination de la relation de dépendance des données, et une unité de mise en mémoire cache de neurones prenant en charge la représentation des données discrètes, où :
l'unité de mise en mémoire cache de neurones prenant en charge la représentation de données discrètes est configurée pour mettre en mémoire cache les données d'entrée et les données de sortie discrètes ou successives utilisées par le module d'exploitation primaire dans un processus de calcul ;
l'unité d'exploitation exécute diverses fonctions d'exploitation du module d'exploitation primaire, où, lorsque les données d'entrée sont les données mélangées comprenant les données discrètes et les données successives, les différents procédés de calcul prédéfinis sont adoptés pour les différentes données discrètes ;
où l'unité d'exploitation comprend une unité de détermination d'opération et une unité d'exploitation de données mélangées ; lorsque les données d'entrée sont les données mélangées, l'unité de détermination d'opération détermine quelle opération est effectuée sur les données mélangées selon les données discrètes incluses dans les données mélangées et, ensuite, l'unité d'exploitation de données mélangées effectue des opérations selon un résultat déterminé par l'unité de détermination d'opération ;
l'unité de détermination de relation de dépendance de données est un port pour l'unité d'exploitation pour lire et écrire dans l'unité de mise en mémoire cache de neurones, garantir que les données successives ou les données discrètes dans l'unité de mise en mémoire cache de neurones ne présentent pas de violation de la cohérence de lecture et d'écriture, et lire le vecteur de gradient de neurones d'entrée à partir de l'unité de mise en mémoire cache de neurones, transmettre à la pluralité de modules d'exploitation secondaires par l'intermédiaire du module d'interconnexion ; et
le vecteur de gradient de neurones de sortie du module d'interconnexion est transmis à l'unité d'exploitation ;
où chacun de la pluralité de modules d'exploitation secondaires comprend une unité d'exploitation, une unité de détermination de relation de dépendance des données, une unité de mise en mémoire cache de neurones prenant en charge la représentation de données discrètes, une unité de mise en mémoire cache de poids prenant en charge la représentation de données discrètes, et une unité de mise en mémoire cache de gradients de poids prenant en charge la représentation de données discrètes, où :
l'unité d'exploitation est configurée pour recevoir les micro-instructions transmises par l'unité de contrôleur et effectuer des opérations arithmétiques logiques, où, lorsque les données d'entrée sont les données mélangées comprenant les données discrètes et les données successives, les différents procédés de calcul prédéfinis sont adoptés pour les différentes données discrètes ;
l'unité de détermination de relation de dépendance de données est configurée pour effectuer des opérations de lecture et d'écriture sur l'unité de mise en mémoire cache de neurones prenant en charge la représentation de données discrètes, l'unité de mise en mémoire cache de poids prenant en charge la représentation de données discrètes, et l'unité de mise en mémoire cache de gradients de poids prenant en charge la représentation de données discrètes dans un processus de calcul, et
s'assurer que l'unité de mise en mémoire cache de neurones prenant en charge la représentation de données discrètes, l'unité de mise en mémoire cache de poids prenant en charge la représentation de données discrètes, et l'unité de mise en mémoire cache de gradients de poids prenant en charge la représentation de données discrètes ne présentent pas de violation de cohérence de lecture et d'écriture ;
l'unité de mise en mémoire cache de neurones prenant en charge la représentation de données discrètes est configurée pour mettre en mémoire cache :
une donnée scalaire dans les données du vecteur de gradient de neurones d'entrée prenant en charge la représentation de données discrètes, qui correspond au module d'exploitation secondaire, et
la somme partielle du vecteur de gradient de neurones de sortie calculée par le module d'exploitation secondaire ;
l'unité de mise en mémoire cache de poids prenant en charge la représentation de données discrètes est configurée pour mettre en mémoire cache des données de poids représentées de manière discrète ou successive requises par le module d'exploitation secondaire dans un processus de calcul, où chacun de la pluralité de modules d'exploitation secondaires stocke simplement une ligne dans une matrice de poids correspondant à la donnée scalaire stockée dans le module d'exploitation secondaire ; et
l'unité de mise en mémoire cache de gradient de poids prenant en charge la représentation de données discrètes est configurée pour mettre en mémoire cache les données de gradient de poids requises par le module d'exploitation secondaire correspondant lorsque le poids est mis à jour, où les données de gradient de poids stockées dans chacun de la pluralité de modules d'exploitation secondaires correspondent aux données de poids représentées de manière discrète ou successive stockées dans le module d'exploitation secondaire.

2. Dispositif selon la revendication 1, dans lequel la représentation de données discrètes se réfère à une représentation de remplacement de données successives réelles par des données discrètes spécifiées.

3. Dispositif selon la revendication 1, dans lequel la pluralité des modules d'exploitation secondaires utilisent le même vecteur de gradient de neurones d'entrée pour calculer des gradients de poids respectifs en parallèle, et utilisent les gradients de poids respectifs calculés pour mettre à jour les données de poids respectives.

4. Dispositif selon la revendication 1, dans lequel le module d'exploitation primaire multiplie, au niveau de chaque entrée, le vecteur de gradient de neurones de sortie de chaque couche par une valeur dérivée d'une fonction d'activation d'une couche suivante pour obtenir un vecteur de gradient de neurones d'entrée de la couche suivante.

5. Dispositif selon la revendication 1, dans lequel le module d'interconnexion forme un chemin de données pour les données successives ou discrètes entre le module d'exploitation primaire et la pluralité des modules d'exploitation secondaires.

6. Dispositif selon la revendication 1, dans lequel la violation de la cohérence de lecture et d'écriture est assurée par des moyens permettant de déterminer si les données des micro-instructions non exécutées ont une relation de dépendance avec les données des micro-instructions étant exécutées ;
lorsque les données des micro-instructions non exécutées n'ont pas de relation de dépendance avec les données des micro-instructions en cours d'exécution, les micro-instructions sont autorisées à être transmises immédiatement, sinon les micro-instructions non exécutées ne sont pas autorisées à être transmises jusqu'à ce que toutes les micro-instructions dont dépendent les micro-instructions non exécutées soient exécutées.

7. Dispositif selon la revendication 1, dans lequel l'unité d'exploitation comprend en outre une unité de détermination de type de données et au moins une unité d'exploitation de données discrètes et une unité d'exploitation de données successives ;
lorsque l'unité d'exploitation comprend l'unité d'exploitation de données discrètes, et lorsque les données d'entrée sont simplement des données discrètes, l'unité d'exploitation de données discrètes effectue des opérations correspondantes par consultation de table selon les données discrètes d'entrée ;
lorsque l'unité d'exploitation comprend l'unité d'exploitation de données successives, et lorsque les données d'entrée sont simplement les données successives, l'unité d'exploitation de données successives effectue les opérations correspondantes.

8. Dispositif selon la revendication 1, comprenant en outre un module de conversion, où le module de conversion comprend une unité de prétraitement, une unité de calcul de distance, et une unité de détermination, et il est supposé que M données discrètes sont utilisées où M = 2^{m}, m ≥ 1, et les données discrètes correspondent à M valeurs dans un intervalle prédéfini [-zone, zone], respectivement, l'unité de prétraitement effectue une opération d'écrêtage (-zone, zone) sur une donnée successive d'entrée x, et obtient une donnée prétraitée y dans l'intervalle [-zone, zone] où, lorsque x ≤ -zone, y = - zone ; lorsque x ≥ zone, y = zone ; et lorsque - zone < x < zone, y = x ;
l'unité de calcul de distance calcule les distances entre la donnée prétraitée y et les valeurs ; et l'unité de détermination calcule des données discrètes sur la base des distances, et délivre en sortie les données discrètes.

9. Dispositif selon la revendication 8, dans lequel :
l'intervalle prédéfini [-zone, zone] est [-1, 1] ou [-2, 2] ; ou
les valeurs absolues des valeurs M sont des réciproques de puissances de 2 ; ou
l'unité de détermination délivre en sortie une donnée discrète correspondant à la valeur la moins éloignée de la donnée prétraitée y et, lorsque deux valeurs sont identiquement éloignées de la donnée prétraitée, l'unité de détermination délivre en sortie une donnée discrète correspondant à l'une quelconque des deux valeurs ; ou
l'unité de détermination calcule une probabilité de normalisation à partir de la donnée prétraitée y vers l'une quelconque des deux valeurs les moins éloignées, compare la probabilité de normalisation correspondant à l'une des deux valeurs les moins éloignées à un nombre aléatoire allant de 0 à 1 généré par une unité de génération de nombres aléatoires, où une première donnée discrète correspond à l'une des deux valeurs les moins éloignées, et une seconde donnée discrète correspond à l'autre des deux valeurs les moins éloignées, et délivre en sortie la première donnée discrète lorsque le nombre aléatoire est inférieur à la probabilité, sinon elle délivre en sortie la seconde donnée discrète.

10. Procédé pour effectuer un apprentissage par rétropropagation d'un réseau neuronal artificiel prenant en charge une représentation de données discrètes, le procédé comprenant les étapes suivantes :
mettre en mémoire cache une instruction par une unité de mise en mémoire cache d'instructions ;
lire, par une unité de contrôleur, l'instruction à partir de l'unité de mise en mémoire cache d'instructions, et décoder l'instruction en micro-instructions configurées pour contrôler des opérations d'un module d'interconnexion, d'un module d'exploitation primaire, et d'une pluralité de modules d'exploitation secondaires ;
où le module d'interconnexion comprend une structure d'arbre en H constituant un chemin d'arbre binaire, ou une structure d'arbre en H réalisant un chemin d'arbre binaire, formé par une pluralité de nœuds, et où chaque nœud de la pluralité de nœuds est configuré pour transmettre des données amont à deux nœuds aval, pour additionner ensemble les données renvoyées par les deux nœuds aval, et pour revenir à un nœud amont ;
lire, par une unité d'accès aux données, des données représentées de manière discrète ou successive à partir d'une mémoire, et écrire dans des unités de mise en mémoire cache de données correspondantes du module d'exploitation principal et de la pluralité de modules d'exploitation secondaires, ou lire les données représentées de manière discrète ou successive à partir des unités de mise en mémoire cache de données correspondantes et écrire dans la mémoire ;
où les données représentées de manière successive sont des données représentées sous forme de données à virgule flottante ou sous forme de données à virgule fixe, et les données représentées de manière discrète sont des données représentées sous forme de nombres naturels, y compris zéro ;
lorsque chaque couche du réseau neuronal artificiel commence l'apprentissage par rétropropagation, le module d'exploitation primaire transmet un vecteur de gradient de neurones d'entrée de la couche à l'ensemble de la pluralité de modules d'exploitation secondaires par l'intermédiaire du module d'interconnexion et,
après que la pluralité de modules d'exploitation secondaires a terminé les calculs, le module d'interconnexion ajoute ensemble les sommes partielles d'un vecteur de gradient de neurones de sortie de la pluralité de modules d'exploitation secondaires, par paires, étape par étape, pour obtenir le vecteur de gradient de neurones de sortie de la couche ;
dans un processus de calcul de chaque couche, effectuer, par le module d'exploitation primaire, des calculs ultérieurs en utilisant le vecteur de gradient de neurones de sortie de la couche où, lorsque les données d'entrée sont des données mélangées comprenant des données discrètes et des données successives, le module d'exploitation primaire adopte des procédés de calcul différents prédéfinis pour différentes données discrètes ; où les données d'entrée sont des données d'entrée du module d'exploitation primaire ; et
utiliser, par chacun de la pluralité de modules d'exploitation secondaires, le même vecteur de gradient de neurones d'entrée et des données de poids discrètes ou successives respectives pour calculer la somme partielle correspondante du vecteur de gradient de neurones de sortie, en parallèle, où, lorsque les données d'entrée sont les données mélangées comprenant les données discrètes et les données successives, la pluralité de modules d'exploitation secondaires adopte des procédés de calcul différents prédéfinis pour les différentes données discrètes ;
le procédé comprenant en outre les étapes suivantes :
déterminer un procédé de calcul prédéfini indexé à utiliser en utilisant une représentation binaire des données discrètes comme un index ;
où les différents procédés de calcul prédéfinis comprennent des opérations au niveau des bits pour des opérations d'addition, des opérations de soustraction, des opérations de multiplication et des opérations de division de différentes données discrètes ;
où les opérations au niveau des bits comprennent une opération de décalage arithmétique à gauche, des opérations de décalage arithmétique à droite, des opérations OU exclusif ;
où le module d'exploitation primaire comprend une unité d'exploitation, une unité de détermination de la relation de dépendance des données, et une unité de mise en mémoire cache de neurones prenant en charge la représentation des données discrètes,
où le procédé comprend en outre les étapes suivantes :
l'unité de mise en mémoire cache de neurones prenant en charge la représentation de données discrètes met en mémoire cache les données d'entrée discrètes ou
successives et délivre en sortie des données utilisées par le module d'exploitation primaire dans un processus de calcul ;
l'unité d'exploitation exécute diverses fonctions d'exploitation du module d'exploitation primaire, où, lorsque les données d'entrée sont les données mélangées comprenant les données discrètes et les données successives, les différents procédés de calcul prédéfinis sont adoptés pour les différentes données discrètes ;
où l'unité d'exploitation comprend une unité de détermination d'opération et une unité d'exploitation de données mélangées ;
où le procédé comprend en outre les étapes suivantes :
lorsque les données d'entrée sont les données mélangées, l'unité de détermination d'opération détermine quelle opération est effectuée sur les données mélangées selon les données discrètes incluses dans les données mélangées, et l'unité d'exploitation de données mélangées effectue des opérations selon un résultat déterminé par l'unité de détermination d'opération ;
l'unité d'exploitation lit et écrit dans l'unité de mise en mémoire cache de neurones en utilisant l'unité de détermination de relation de dépendance de données comme un port, pour garantir que les données successives ou les données discrètes dans l'unité de mise en mémoire cache de neurones ne présentent pas de violation de la cohérence de lecture et d'écriture, et l'unité de détermination de relation de dépendance de données lit le vecteur de gradient de neurones d'entrée à partir de l'unité de mise en mémoire cache de neurones, transmet à la pluralité de modules d'exploitation secondaires par l'intermédiaire du module d'interconnexion ; et
transmet le vecteur de gradient de neurones de sortie du module d'interconnexion à l'unité d'exploitation ;
où chacun de la pluralité de modules d'exploitation secondaires comprend une unité d'exploitation, une unité de détermination de relation de dépendance des données, une unité de mise en mémoire cache de neurones prenant en charge la représentation de données discrètes, une unité de mise en mémoire cache de poids prenant en charge la représentation de données discrètes, et une unité de mise en mémoire cache de gradient de poids prenant en charge la représentation de données discrètes ;
où le procédé comprend en outre les étapes suivantes :
l'unité d'exploitation reçoit les micro-instructions transmises par l'unité de contrôleur et effectue des opérations arithmétiques logiques où, lorsque les données d'entrée sont les données mélangées comprenant les données discrètes et les données successives, les différents procédés de calcul prédéfinis sont adoptés pour les différentes données discrètes ;
l'unité de détermination de relation de dépendance de données effectue des opérations de lecture et d'écriture sur l'unité de mise en mémoire cache de neurones prenant en charge la représentation de données discrètes, l'unité de mise en mémoire cache de poids prenant en charge la représentation de données discrètes, et l'unité de mise en mémoire cache de gradient de poids prenant en charge la représentation de données discrètes dans un processus de calcul, et
s'assure que l'unité de mise en mémoire cache de neurones prenant en charge la représentation de données discrètes, l'unité de mise en mémoire cache de poids prenant en charge la représentation de données discrètes, et l'unité de mise en mémoire cache de gradient de poids prenant en charge la représentation de données discrètes ne présentent pas de violation de cohérence de lecture et d'écriture ;
l'unité de mise en mémoire cache de neurones prenant en charge la représentation de données discrètes met en mémoire cache une donnée scalaire dans les données du vecteur de gradient de neurones d'entrée prenant en charge la représentation de données discrètes qui correspond au module d'exploitation secondaire et à la somme partielle du vecteur de gradient de neurones de sortie calculée par le module d'exploitation secondaire ;
l'unité de mise en mémoire cache de poids prenant en charge la représentation de données discrètes met en mémoire cache des données de poids représentées de manière discrète ou de manière successive requises par le module d'exploitation secondaire dans un processus de calcul, où chacun de la pluralité de modules d'exploitation secondaires stocke simplement une ligne dans une matrice de poids correspondant à la donnée scalaire stockée dans le module d'exploitation secondaire ; et
l'unité de mise en mémoire cache de gradient de poids prenant en charge la représentation de données discrètes met en mémoire cache les données de gradient de poids requises par le module d'exploitation secondaire correspondant lorsque le poids est mis à jour, où les données de gradient de poids stockées dans chacun de la pluralité de modules d'exploitation secondaires correspondent aux données de poids représentées de manière discrète ou successive stockées dans le module d'exploitation secondaire.

11. Procédé selon la revendication 10, dans lequel la représentation de données discrètes se réfère à une représentation de remplacement de données successives réelles par des données discrètes spécifiées.

12. Procédé selon la revendication 10 ou la revendication 11, comprenant en outre les étapes suivantes :
la pluralité des modules d'exploitation secondaires utilisent le même vecteur de gradient de neurones d'entrée pour calculer des gradients de poids respectifs en parallèle, et utilisent les gradients de poids respectifs calculés pour mettre à jour les données de poids respectives.

13. Procédé selon l'une quelconque des revendications précédentes 10 à 12, comprenant en outre les étapes suivantes :
le module d'exploitation primaire multiplie, au niveau de chaque entrée, le vecteur de gradient de neurones de sortie de chaque couche par une valeur dérivée d'une fonction d'activation d'une couche suivante pour obtenir un vecteur de gradient de neurones d'entrée de la couche suivante.

14. Procédé selon l'une quelconque des revendications précédentes 10 à 13, dans lequel le module d'interconnexion forme un chemin de données pour les données successives ou discrètes entre le module d'exploitation primaire et la pluralité des modules d'exploitation secondaires.

15. Procédé selon la revendication 10, dans lequel la violation de la cohérence de lecture et d'écriture est assurée par des moyens permettant de déterminer si les données des micro-instructions non exécutées ont une relation de dépendance avec les données des micro-instructions étant exécutées ;
où le procédé comprend en outre les étapes suivantes :
lorsque les données des micro-instructions non exécutées n'ont pas de relation de dépendance avec les données des micro-instructions en cours d'exécution, autoriser de transmettre immédiatement les micro-instructions, sinon les micro-instructions non exécutées ne sont pas autorisées à être transmises jusqu'à ce que toutes les micro-instructions dont dépendent les micro-instructions non exécutées soient exécutées.

16. Procédé selon la revendication 10, dans lequel l'unité d'exploitation comprend en outre une unité de détermination de type de données et au moins une unité d'exploitation de données discrètes et une unité d'exploitation de données successives ;
où le procédé comprend en outre les étapes suivantes :
lorsque l'unité d'exploitation comprend l'unité d'exploitation de données discrètes, et lorsque les données d'entrée sont simplement des données discrètes,
l'unité d'exploitation de données discrètes effectue des opérations correspondantes par consultation de table selon les données discrètes d'entrée ;
lorsque l'unité d'exploitation comprend l'unité d'exploitation de données successives, et lorsque les données d'entrée sont simplement les données successives, l'unité d'exploitation de données successives effectue des opérations correspondantes.

17. Procédé selon l'une quelconque des revendications précédentes 10 à 16, comprenant en outre de fournir un module de conversion, où le module de conversion comprend une unité de prétraitement, une unité de calcul de distance, et une unité de détermination, et il est supposé que M données discrètes sont utilisées où M = 2^{m}, m ≥ 1, et les données discrètes correspondent à M valeurs dans un intervalle prédéfini [-zone, zone], respectivement,
où le procédé comprend en outre les étapes suivantes :
l'unité de prétraitement effectue une opération d'écrêtage (-zone, zone) sur une donnée successive d'entrée x, et obtient une donnée prétraitée y dans l'intervalle [-zone, zone] où, lorsque x ≤ -zone, y = - zone ; lorsque x ≥ zone, y = zone ; et lorsque - zone < x < zone, y = x ;
l'unité de calcul de distance calcule les distances entre la donnée prétraitée y et les valeurs ; et
l'unité de détermination calcule des données discrètes sur la base des distances, et délivre en sortie les données discrètes.

18. Procédé selon la revendication 17, dans lequel l'intervalle prédéfini [-zone, zone] est [-1, 1] ou [-2, 2] ; ou
dans lequel les valeurs absolues des valeurs M sont des réciproques de puissances de 2 ; ou
dans lequel le procédé comprend en outre les étapes suivantes :
l'unité de détermination délivre en sortie une donnée discrète correspondant à la valeur la moins éloignée de la donnée prétraitée y et, lorsque deux valeurs sont identiquement éloignées de la donnée prétraitée,
l'unité de détermination délivre en sortie une donnée discrète correspondant à l'une quelconque des deux valeurs ; ou
l'unité de détermination calcule une probabilité de normalisation à partir de la donnée prétraitée y vers l'une quelconque des deux valeurs les moins éloignées,
compare la probabilité de normalisation correspondant à l'une des deux valeurs les moins éloignées à un nombre aléatoire allant de 0 à 1 généré par une unité de génération de nombres aléatoires, où une première donnée discrète correspond à l'une des deux valeurs les moins éloignées, et une seconde donnée discrète correspond à l'autre des deux valeurs les moins éloignées, et délivre en sortie la première donnée discrète lorsque le nombre aléatoire est inférieur à la probabilité, sinon elle délivre en sortie la seconde donnée discrète.

19. Procédé pour effectuer un apprentissage par rétropropagation d'un réseau neuronal artificiel à couche unique en utilisant le procédé de l'une quelconque des revendications 10 à 18.

20. Procédé pour effectuer un apprentissage par rétropropagation d'un réseau neuronal artificiel à couches multiples selon la revendication 19, le procédé comprenant les étapes suivantes :
exécuter le procédé de la revendication 19 pour chaque couche du réseau neuronal artificiel à couches multiples, où, après qu'une couche précédente du réseau neuronal artificiel à couches multiples a terminé l'opération, le vecteur de gradient de neurones d'entrée requis par l'apprentissage par rétropropagation d'une couche suivante et calculé par le module d'exploitation primaire est utilisé pour exécuter à nouveau le procédé de la revendication 19 pour la couche suivante.
